(19) Europäisches Patentamt
European Patent Office
Office européen des brevets

(11) **EP 4 071 770 A1**

(12) **EUROPEAN PATENT APPLICATION**
published in accordance with Art. 153(4) EPC

(43) Date of publication:
**12.10.2022 Bulletin 2022/41**

(21) Application number: **20896078.1**

(22) Date of filing: **08.10.2020**

(51) International Patent Classification (IPC):
***H01F 1/00*** (2006.01) ***H01F 41/02*** (2006.01)
***C09D 133/08*** (2006.01) ***C09D 153/00*** (2006.01)
***C09D 175/00*** (2006.01) ***C08K 9/04*** (2006.01)
***C08K 3/22*** (2006.01)

(52) Cooperative Patent Classification (CPC):
**C08K 3/22; C08K 9/04; C09D 133/08; C09D 153/00; C09D 175/00; H01F 1/00; H01F 41/02; H02K 1/16**

(86) International application number:
**PCT/KR2020/013751**

(87) International publication number:
**WO 2021/112389 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2019 KR 20190158213**
**02.12.2019 KR 20190158214**

(71) Applicant: **LG Chem, Ltd.**
**Seoul 07336 (KR)**

(72) Inventors:
- **KIM, Yeong Hwa**
**Daejeon 34122 (KR)**
- **AHN, Sang Bum**
**Daejeon 34122 (KR)**
- **JEONG, Woong Chan**
**Daejeon 34122 (KR)**
- **LEE, Jin Kyu**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **MAGNETIC SUBSTANCE, CURABLE COMPOSITION COMPRISING SAME, AND METHOD FOR PRODUCING THE MAGNETIC SUBSTANCE**

(57) The present application relates to a magnetic body, a curable composition comprising the same, and a method for manufacturing the magnetic body. The magnetic body of the present application may have an excellent calorific value, and at the same time, may maintain the calorific value uniformly. In the magnetic body of the present application, the calorific value characteristics may be freely adjusted. The curable composition of the present application can be easily cured by using a magnetic body that satisfies all the characteristics. The method of the present application can simply produce a magnetic body that satisfies all the characteristics.

[Figure 3]

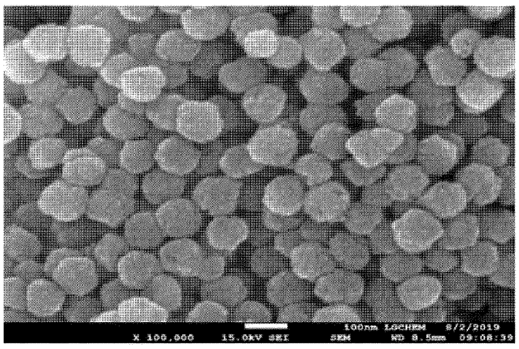

EP 4 071 770 A1

## Description

## Technical Field

Cross-Reference with Related Applications

This application claims the benefit of priority based on Korean Patent Application No. 10-2019-0158213 dated December 2, 2019 and Korean Patent Application No. 10-2019-0158214 dated December 2, 2019, the disclosures of which are incorporated herein by reference in their entirety.

Technical Field

The present application relates to a magnetic body, a curable composition comprising the same, and a method for manufacturing the magnetic body.

## Background Art

A magnetic body (specifically, a so-called "nano-magnetic body" having a size of several tens to hundreds nm) has a characteristic of generating heat when an alternating magnetic field is applied. Therefore, the magnetic body is used in various fields such as rapid curing of thermosetting resins, heat treatment of polymers, or hyperthermia anticancer treatment.

The heat generation property of the magnetic body varies depending on external conditions such as the strength, output or frequency of the alternating magnetic field applied to the magnetic body. In addition, the heat generation property also varies depending on the intrinsic properties of the magnetic body itself, such as the size, shape, size distribution, composition and magnetism-related properties (coercive force, saturation magnetization value, residual magnetization value, etc.) of the magnetic body. Then, magnetic bodies having the same composition and particle characteristics may also have different heat generation properties.

In order to easily control a calorific value by induction heating, it is important that the magnetic body has excellent heat generation efficiency, but the heat generation property needs to be uniformly implemented.

## Disclosure

## Technical Problem

It is one object of the present application to provide a magnetic body having an excellent calorific value and at the same time being capable of maintaining the calorific value uniformly.

It is one object of the present application to provide a magnetic body in which the heat generation property can be freely adjusted.

It is one object of the present application to provide a curable composition which can be easily cured using a magnetic body that satisfies all the characteristics.

It is one object of the present application to provide a method for simply producing a magnetic body that satisfies all the characteristics.

## Technical Solution

Among the physical properties mentioned in the present application, if the measured temperature and/or pressure affect the physical property, the physical property means a physical property measured at room temperature and/or normal pressure, unless otherwise specified.

In the present application, the term "room temperature" is a natural temperature that is not particularly heated and/or cooled, which may be any temperature within the range of about 10°C to 30°C, or a temperature of 25°C or 23°C or so.

In the present application, the term "normal pressure" is a pressure at the time of having not particularly been pressurized and/or depressurized, which may be usually 1 atm or so, such as atmospheric pressure.

The present application relates to a magnetic body.

In the present application, the magnetic body is a material exhibiting magnetism, which may mean a material capable of generating heat when an electromagnetic field of a predetermined condition has been applied from the outside.

In the present application, the magnetic body may optionally be referred to as a "nano magnetic body". This may mean that the magnetic body has a size of a nanometer unit, specifically, a size of several to hundreds nm.

In the present application, the magnetic body is a composite comprising magnetic particles and a surface treatment agent introduced to the surface of the magnetic particles. In the present application, it is possible to provide a magnetic body suitable for the purpose by controlling the properties of the proper magnetic particles and/or the selection and combination of the surface treatment agents, and their composition.

The present inventors have confirmed that when the characteristics related to the size of the magnetic particles are specified under specific conditions and combined with a surface treatment agent, the excellent calorific value can be exhibited at the time that an electromagnetic field has been applied to the magnetic body and the calorific value can be maintained uniformly, and reached the present invention.

The magnetic particles comprise crystals, the size of which is within a specific range. The size of the crystals included in the magnetic particles is in the range of 10 nm to 40 nm. In another example, the size of the crystals may be 15 nm or more, or 20 nm or more, and may be 37 nm or less, or 35 nm or less.

In one example, when the magnetic particles have a constant average particle diameter, the calorific value of the magnetic body comprising the magnetic particles may be higher as the size of the crystals increases within the above range of the size of the crystals.

When the plurality of sizes of the crystals present in the magnetic particles are not constant, the size of the crystals may mean a maximum size, a minimum size or an average size of the crystals. The size of the crystal may be measured through an X-ray diffraction analysis of the magnetic particles or magnetic powder, and as a specific measurement method, the method in Examples to be described below may be applied.

In addition, the magnetic particles have an average particle diameter within a specific range. Specifically, the magnetic body of the present application comprises magnetic particles having an average particle diameter in a range of 20 nm to 300 nm. At this time, the magnetic body may exhibit a high calorific value when an external magnetic field is applied, and maintain the calorific value uniformly.

In another example, the average particle diameter of the magnetic particles may be 30 nm or more, 40 nm or more, 50 nm or more, 60 nm or more, 70 nm or more, or 80 nm or more, and may be 290 nm or less, 280 nm or less, 270 nm or less, 260 nm or less, 250 nm or less, 240 nm or less, 230 nm or less, 220 nm or less, 210 nm or less, 200 nm or less, 190 nm or less, 180 nm or less, 170 nm or less, 160 nm or less, 150 nm or less, 140 nm or less, 130 nm or less, or 120 nm or less.

A method of measuring the average particle diameter of the magnetic particles is not particularly limited. For example, the average particle diameter of the magnetic particles may be measured by preparing a magnetic body comprising the magnetic particles and then analyzing an electron micrograph taken of the magnetic body.

In addition, the magnetic body of the present application comprises magnetic particles having a particle diameter variation coefficient within a specific range. Accordingly, it may have a high calorific value uniformly when an external magnetic field is applied. Specifically, the particle diameter variation coefficient of the magnetic particles is in a range of 5% to 30%. In the present application, the variation coefficient of any factor may mean that a ratio of the standard variation of the factor to the mean of the factor is expressed as a percentage. That is, it may mean, in the magnetic body, a ratio (SV/M) of the standard variation (SV) of the particle diameters of the magnetic particles to the mean (M) of the particle diameters of the magnetic particles. The particle diameter variation coefficient of the magnetic particles may be estimated through electron micrographs obtained with respect to the magnetic body.

As such, the magnetic body of the present application, which comprises magnetic particles (1) having crystals having a size within a specific range, (2) having an average particle diameter within a specific range and simultaneously (3) having a variation coefficient of the particle diameter within a specific range, and (4) a surface treatment agent being introduced to the surface of the particles, may generate heat with a high calorific value when an external magnetic field is applied, and maintain the calorific value uniformly.

As the magnetic particle, a multi-magnetic domain type magnetic particle comprising two or more magnetic domains may be applied. The multi-magnetic domain type magnetic particle is a magnetic particle having a property that when no external magnetic field is applied, the magnetic domains (or crystals) are randomly arranged, and when an external magnetic field is applied, they can be magnetized along the direction of the applied magnetic field. Here, the meaning that the magnetic domains (or crystals) are randomly arranged may mean that the directions of magnetic force are different from each other and are in an unaligned state, but the true (net) value of magnetization is substantially close to 0, so that macroscopically, it is recognized as a state without magnetism. The magnetic particles may be superparamagnetic particles.

As applied in the present application, the term "magnetic domain" generally means a region in which magnetization directions are distinguished from each other in a magnetic particle. In the present application, when the magnetic particles have two or more magnetic domains, the magnetic domains may be strongly magnetized by an external alternating magnetic field to generate vibrational heat, and when the magnetic field is removed, the particles return magnetic domains having their original state, whereby magnetic particles with low residual magnetization of hysteresis loss may be formed.

It can be usually confirmed through the particle diameter of a magnetic particle whether or not the magnetic

particle is a multi-magnetic domain type magnetic particle. For example, if the magnetic particle has a particle diameter of Ds or more satisfying Equation 1 below, the magnetic particle is usually expected to be a multi-magnetic domain type magnetic particle:

[Equation 1]

$$D_s = 2\sqrt{\frac{9A}{\mu_0 M_S^2}\left[\ln\left(\frac{D_s}{a}\right) - 1\right]}$$

In Equation 1, the meaning of each variable is as follows:

*$\mu_0$: magnetic permittivity constant in vacuum (1.26Y10$^{-6}$H/m)
*Ms: saturation magnetization of magnetic particles (unit: A/m or emu/g)
*A: exchange stiffness of magnetic particles (unit: J/m)
*a: lattice constant of magnetic particles (unit: m)

In Equation 1, variables other than the magnetic permittivity constant in vacuum, that is, the saturation magnetization, exchange stiffness, and lattice constant of the magnetic particles may be changed according to specific types constituting the magnetic particles. Therefore, after checking each of the numerical values for the magnetic particles to be applied, the size of the magnetic particles is controlled to the Ds or more obtained by substituting the numerical values into Equation 1 above, whereby the magnetic particles having multi-magnetic domains can be formed.

That is, when the magnetic particle applied in the present application is a multi-magnetic domain magnetic particle, the magnetic particle may have a particle diameter of Ds or more obtained according to Equation 1 above. Usually, as the particle diameter of the magnetic particles exceeds Ds, the coercive force of the magnetic particles tends to decrease, and the magnetic particles applied in the present application may have a particle diameter within a range having a coercive force to be described below.

Such magnetic particles behave similarly to those without magnetism when no external magnetic field is applied, and thus when a magnetic body comprising the magnetic particles is applied to, for example, a composition or the like, the magnetic body may also exist in a state uniformly dispersed in the composition.

The magnetic particles do not generate heat by a so-called eddy current or hysteresis loss, but may be adjusted so that the hysteresis loss of the magnetic particles themselves is small and only the saturation magnetization value is substantially present to be capable of generating vibrational heat. For example, when an external electromagnetic field is applied, the magnetic particles vibrate by their coercive force, and as a result, heat may be generated.

When the magnetic body satisfies the above conditions, specifically, that it comprises magnetic particles and a surface treatment agent introduced to the surface of the magnetic particles, wherein the magnetic particles comprise crystals and/or magnetic domains having a size within the above range and the average particle diameter of the magnetic particles is in the above range, and the particle diameter variation coefficient of the particles satisfies all of the above conditions, the magnetic body or the magnetic powder comprising the magnetic body has an advantage that it can show an excellent calorific value and simultaneously exhibit the excellent calorific value uniformly. Specifically, the magnetic body satisfying the above conditions may have an appropriate number of magnetic domains and an appropriate size of coercive force, and as a result, may generate vibrational heat when an electromagnetic field is applied, through a low coercive force and a plurality of magnetic domains, and since it is possible to allow only the saturation magnetization value to exist while reducing the hysteresis loss of the magnetic particles themselves, stable and uniform heat generation may be possible when an electromagnetic field is applied. Meanwhile, when any one of the above conditions is not satisfied, for example, the magnetic body does not comprise a surface treatment agent, or even if the surface treatment agent is included, the surface treatment agent is first introduced into the surface of the crystals constituting the magnetic particles rather than the magnetic particles, or it has particle characteristics outside the range of the crystal size and the average particle diameter of the magnetic particles, or the variation coefficient of the particle diameter as described above, there may be a problem that it has a low calorific value under a certain magnetic field application condition, or even if the calorific value is high, it is not maintained uniformly.

In controlling calorific properties of a magnetic body, the size of the magnetic particles themselves of the magnetic body and the size of crystals and/or magnetic domains constituting the particles are also important, but it is preferable that the ratio between them is also appropriately controlled. For example, the ratio (B/A) of the average particle diameter (B) of the magnetic particles to the crystal size (A) of the magnetic particles may be in the range of 1.5 to 10.

In another example, the ratio may be 2 or more or 2.5 or more, and may be 9 or less, 8 or less, 7 or less, 6 or less, 5 or less, 4 or less, 3.5 or less, or 3.3 or less.

As long as the magnetic particles can generate heat through application of an electromagnetic field, that is, induction heating, the chemical composition thereof is not particularly limited. For example, the magnetic particles may include a compound represented by Formula 1 below:

[Formula 1] $MX_aO_b$

In Formula 1, M is a metal or metal oxide, X includes Fe, Mn, Co, Ni or Zn, and |a X c| = |b X d| is satisfied, where c is the cation charge of X, and d is the anion charge of oxygen. In one example, M in Formula 1 above may be Fe, Mn, Mg, Ca, Zn, Cu, Co, Sr, Si, Ni, Ba, Cs, K, Ra, Rb, Be, Li, Y, B, or an oxide thereof. For example, when $X_aOb$ is $Fe_2O_3$, c may be +3 and d may be -2. Also, for example, when $X_aO_b$ is $Fe_3O_4$, it can be expressed as $FeOFe_2O_3$, so that c may be +2 and +3, respectively, and d may be -2. The structure of the compound of the magnetic particles is not particularly limited as long as it satisfies Formula 1 above, which may be, for example, $FeOFe_2O_3$.

The magnetic particles may be made of the compound of Formula 1 above, or may comprise a compound in which the compound of Formula 1 is doped with an inorganic material. The inorganic material may include monovalent to trivalent cationic metals or oxides thereof, and two or more of plural cationic metals may also be used.

As described above, the magnetic particles may exist in a clustered form. Specifically, the magnetic particles comprise a plurality of crystals having a size within a specific range, as described above, where such crystals may be clustered to form the magnetic particles. That is, the magnetic particles may exist in a form in which clusters of crystals (or magnetic domains) are formed in the magnetic body. In this case, a decrease in the calorific value generated by aggregation between the magnetic particles can be prevented.

In the magnetic body, the magnetic particles are surface-treated with an appropriate surface treatment agent. The surface treatment of the magnetic particles may be performed using a compound (surface treating agent) that can be introduced to the surface of the magnetic particles. That is, as described above, the magnetic body comprises magnetic particles and a surface treatment agent introduced to the surface of the magnetic particles.

In the present application, the term "introduction," "anchoring," "interaction" or "bonding" used while referring to the surface treatment of the magnetic body means a case where a bond is formed between the magnetic particles and the surface treatment agent or between the surface treatment agents. Then, here, the bond may be used as the meaning to include all bonds known to be capable of linking two components such as a covalent bond, an ion bond, a hydrogen bond, a coordination bond and/or van der Waals binding.

In one example, as the surface treatment agent, a precursor of the magnetic particles or a compound having a functional group capable of binding to the surface of the magnetic particles by strong bonding force may be applied. As the compound having the functional group, a compound having a phosphoric acid group, a carboxyl group, a sulfonic acid group, an amino group and/or a cyano group may be applied. have. Therefore, the magnetic particles or precursors of the magnetic particles are surface-treated with a material having such a functional group, that is, a surface treatment agent.

In the present application, as the compound that can be applied as a surface treatment agent, a polyol-based compound, a polysiloxane-based compound, an alkyl phosphoric acid-based surface treatment agent (for example, a compound of the following formula A), an alkylcarboxylic acid-based surface treatment agent (for example, a compound of the following formula B), an alkyl sulfonic acid-based surface treatment agent, an acid compound containing other long-chain alkyl groups, an acrylic copolymer containing an acidic functional group or an amino group, an aromatic acid-based surface treatment agent or a block copolymer containing an acidic functional group or an amino group, and the like can be applied.

[Formula A]

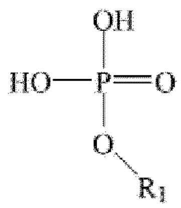

[Formula B]

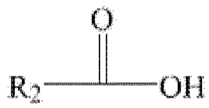

[Formula C]

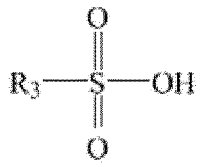

In Formulas A to C, $R_1$ to $R_3$ are each independently an alkyl group, an arylalkyl group, an alkoxy group or an arylalkoxy group.

The alkyl group or alkoxy group which may be included in Formulas A to C above may be exemplified by an alkyl group or alkoxy group having a carbon number in a range of 6 to 24. Also, in another example, the carbon number of the alkyl group or alkoxy group may be 7 or more, 8 or more, 9 or more, 10 or more, 11 or more, 12 or more, 13 or more, 14 or more, 15 or more, 16 or more, 17 or more, 18 or more, 19 or more, 20 or more, 21 or more, 22 or more, or 23 or more, or may also be 23 or less, 22 or less, 21 or less, 20 or less, 19 or less, 18 or less, 17 or less, 16 or less, 15 or less, 14 or less, 13 or less, 12 or less, 11 or less, 10 or less, 9 or less, 8 or less, or 7 or less or so.

The alkyl group or alkoxy group which may be included in Formulas A to C above may be exemplified by an aryl group having about 6 to 13 carbon atoms, and for example, a benzyl group or a phenyl group, and the like can be applied.

Furthermore, in another example, as the surface treatment agent, (a) a phosphoric acid ester salt of an oligomer or polymer containing an amino group such as a phosphoric acid ester salt of optionally fatty acid-modified or alkoxylated (especially ethoxylated) polyamine, a phosphoric acid ester salt of an epoxide-polyamine adduct, a phosphoric acid ester salt of an acrylate or methacrylate copolymer containing an amino group or a phosphoric acid ester salt of an acrylate-polyamine adduct; (b) a monoester or diester of phosphoric acid such as a monoester or diester of a phosphate having alkyl, aryl, aralkyl or alkylaryl alkoxylate (e.g.: a phosphoric acid monoester or diester of nonylphenol ethoxylate, isotridecyl alcohol ethoxylate or butanol-initiated alkylene oxide polyether) or a monoester or diester of phosphoric acid having a polyester (e.g.: a lactone polyester such as a caprolactone polyester or a caprolactone/valerolactone mixed polyester); (c) an acidic dicarboxy monoester such as an acidic dicarboxy monoester having alkyl, aryl, aralkyl or alkylaryl alkoxylate (especially those of succinic acid, maleic acid or phthalic acid) (e.g.: nonylphenol ethoxylate, isotridecyl alcohol ethoxylate or butanol-initiated alkylene oxide polyether); (d) a polyurethane-polyamine adduct; (e) a polyalkoxylated monoamine or diamine (e.g.: ethoxylated oleylamine or alkoxylated ethylenediamine) or (f) a reaction product of a monoamine, a diamine, a polyamine or an amino alcohol and an unsaturated fatty acid, and a reaction product of unsaturated 1,2-dicarboxylic acids and their anhydrides and their salts and alcohols and/or amines, and the like can also be applied.

Such surface treatment agents are known as commercially available products, and for example, a surface treatment agent known as a product name, such as BYK-220 S, BYK-P 9908, BYK-9076, BYK-9077, BYK-P 104, BYK-P 104 S, BYK-P 105, BYK-W 9010, BYK-W 920, BYK-W 935, BYK-W 940, BYK-W 960, BYK-W 965, BYK-W 966, BYK-W 975, BYK-W 980, BYK-W 990, BYK-W 995, BYK-W 996, BYKUMEN, BYKJET 9131, LACTIMON, ANTI-TERRA-202, ANTI-TERRA-203, ANTI-TERRA-204, ANTI-TERRA-205, ANTI-TERRA-206, ANTI-TERRA-207, ANTI-TERRA-U 100, ANTI-TERRA-U 80, ANTI-TERRA-U, LP-N-21201, LP-N-6918, DISPERBYK, DISPERBYK-101, DISPERBYK-102, DISPERBYK-103, DISPERBYK-106, DISPERBYK-107, DISPERBYK-108, DISPERBYK-109, DISPERBYK-110, DISPERBYK-111, DISPERBYK-112, DISPERBYK-115, DISPERBYK-116, DISPERBYK-118, DISPERBYK-130, DISPERBYK-140, DISPERBYK-142, DISPERBYK-145, DISPERBYK-160, DISPERBYK-161, DISPERBYK-162, DISPERBYK-163, DISPERBYK-164, DISPERBYK-165, DISPERBYK-166, DISPERBYK-167, DISPERBYK-168, DISPERBYK-169, DISPERBYK-170, DISPERBYK-171, DISPERBYK-174, DISPERBYK-176, DISPERBYK-180, DISPERBYK-181, DISPERBYK-182, DISPERBYK-183, DISPERBYK-184, DISPERBYK-185, DISPERBYK-187, DISPERBYK-190, DISPERBYK-191, DISPERBYK-192, DISPERBYK-193, DISPERBYK-194, DISPERBYK-2000, DISPERBYK-2001, DISPERBYK-2008, DISPERBYK-2009, DISPERBYK-2010, DISPERBYK-2020, DISPERBYK-2025, DISPERBYK-2050, DISPERBYK-2070, DISPERBYK-2090, DISPERBYK-2091, DISPERBYK-2095, DISPERBYK-2096, DISPERBYK-2150, DISPERBYK-2151, DISPERBYK-2152, DISPERBYK-2155, DISPERBYK-2163, DISPERBYK-2164, DISPERBLAST-1010,

DISPERBLAST-1011, DISPERBLAST-1012, DISPERBLAST-1018, DISPERBLAST-I or DISPERBLAST-P (BYK-Chemie, Wesel), can be used.

For proper surface treatment, as the surface treatment agent, a surface treatment agent having an acid value or an amine value within a specific range may be applied. In one example, the surface treating agent may be a surface treating agent in the range of 10 to 400 mgKOH/g, or a surface treating agent having an amine value in the range of 5 to 400 mgKOH/g.

In another example, the acid value of the surface treating agent may be about 20mgKOH/g or more, 30mgKOH/g or more, 40mgKOH/g or more, 50mgKOH/g or more, 60mgKOH/g or more, 70mgKOH/g or more, 80mgKOH/ or more, or 90mgKOH/g or more, or may also be about 390mgKOH/g or less, 380mgKOH/g or less, 370mgKOH/g or less, 360mgKOH/g or less, 350mgKOH/g or less, 340mgKOH/g or less, 330mgKOH/g or less, 320mgKOH/g or less, 310mgKOH/g or less, 300mgKOH/g or less, 290mgKOH/g or less, 280mgKOH/g or less, 270mgKOH/g or less, 260mgKOH/g or less, 250mgKOH/g or less, 240mgKOH/g or less, 230mgKOH/g or less, 220mgKOH/g or less, 210mgKOH/g or less, 200mgKOH/g or less, 190mgKOH/g or less, 180mgKOH/g or less, 170mgKOH/g or less, 160mgKOH/g or less, 150mgKOH/g or less, 140mgKOH/g or less, 130mgKOH/g or less, 120mgKOH/g or less, 110mgKOH/g or less, or 100mgKOH/g or less or so.

In another example, the amine value of the surface treatment agent may be about 10mgKOH/g or more, about 15mgKOH/g or more, about 20mgKOH/g or more, 30mgKOH/g or more, 40mgKOH/g or more, 50mgKOH/g or more, 60mgKOH/g or more, 70mgKOH/g or more, 80mgKOH/g or more, or 90mgKOH/g or more, or may also be about 390mgKOH/g or less, 380mgKOH/g or less, 370mgKOH/g or less, 360mgKOH/g or less, 350mgKOH/g or less, 340mgKOH/g or less, 330mgKOH/g or less, 320mgKOH/g or less, 310mgKOH/g or less, 300mgKOH/g or less, 290mgKOH/g or less, 280mgKOH/g or less, 270mgKOH/g or less, 260mgKOH/g or less, 250mgKOH/g or less, 240mgKOH/g or less, 230mgKOH/g or less, 220mgKOH/g or less, 210mgKOH/g or less, 200mgKOH/g or less, 190mgKOH/g or less, 180mgKOH/g or less, 170mgKOH/g or less, 160mgKOH/g or less, 150mgKOH/g or less, 140mgKOH/g or less, 130mgKOH/g or less, 120mgKOH/g or less, 110mgKOH/g or less, or 100mgKOH/g or less or so.

In the present application, the term "amine value" means, when an amino group ($NH_2$, -NHR or $-NR_2$) contained in the surface treatment agent has been titrated with KOH, the ratio (a numerical value expressing the amount of KOH consumed when 1 g of the surface treatment agent is titrated, in mg) of the amount of KOH used for the titration.

In the present application, the term "acid value" means, when an acidic functional group (-COOH, etc.) contained in the surface treatment agent has been titrated with KOH, the ratio (a numerical value expressing the amount of KOH consumed when 1 g of the surface treatment agent is titrated, in mg) of the amount of KOH used for the titration.

The acid value may be measured by dissolving a sample in a solvent (a mixed solvent in which diethyl ether and ethanol are mixed in a volume ratio of 2:1 (diethyl ether: ethanol)), and using an automatic potentiometric titrator (Mettler, G10S). The potentiometric titration is performed with an ethanol solution (potassium hydroxide-ethanol solution) in which KOH is dissolved so that the concentration becomes about 0.1 mol/L for the sample, the amount of potassium hydroxide-ethanol solution required to neutralize the sample is measured, and then the acid number can be calculated through Equation A below:

[Formula A]

$$\text{Acid value} = (B \times f \times 5.611)/S$$

In Equation A, B is the amount (unit: mL) of the potassium hydroxide-ethanol solution used for titration, f is the factor of 0.1 mol/L potassium hydroxide-ethanol solution, and S is the mass (g) of the solid content of the sample.

After a sample is placed in a flask in an amount of about 0.5 g and dissolved with neutralizing acetone and then, the solution is cooled and titrated with 0. IN HCl until the color changes from blue to yellow using a bromophenol blue indicator, the amine value can be obtained through the following equation B:

[Formula B]

$$\text{Amine value} = \text{number of moles of 0.1N HCl solution} \times 100 \times 5.61/\text{sample weight} \times \text{NV}$$

In Equation B above, NV is non-volatile, i.e., a solid content, which can be obtained in the following manner.

After a sample is weighed in an amount of about 0.8 to 1.0g on a 7.5 cm diameter tin lid, spread evenly, and then dried in an air circulator drying oven at 125°C for 60 minutes, it can be obtained by the following equation C.

[Equation C]

NV (unit: %) = final weight (weight after drying)/initial weight (weight before drying) X 100

Meanwhile, in order to secure the desired physical properties (viscosity, etc.), it is preferable that the properties of the surface treatment agent are also appropriately controlled. For example, the surface treatment agent may have a weight average molecular weight (Mw) of 20,000 or less. The "weight average molecular weight" is a standard polystyrene conversion value measured by GPC (gel permeation chromatograph). In another example, the weight average molecular weight of the surface treatment agent may be about 19,000 or less, 18,000 or less, 17,000 or less, 16,000 or less, 15,000 or less, 14,000 or less, 13,000 or less, 12,000 or less, 11,000 or less, 10,000 or less, 9,000 or less, 8,000 or less, 7,000 or less, 6,000 or less, 5,000 or less, 4,000 or less, 3,000 or less, 2,000 or less, or 1,000 or less, and may also be 100 or more, 200 or more, 300 or more, 400 or more, 500 or more, 600 or more, 700 or more, 800 or more, 900 or more, or 1,000 or more. It may vary depending on the type of the surface treatment agent, but as the molecular weight of the surface treatment agent applied within the above range increases, the size of the crystals constituting the magnetic particles may tend to decrease relatively.

In the present application, the magnetic body may also be formed by applying a method of interacting with magnetic particles the functional group present in a compound having a specific functional group, specifically, an anchoring functional group, or by introducing the functional group into the surface treatment agent by a known chemical method and then interacting it with the magnetic particles when the surface treatment agent does not have the functional group.

The ratio of the surface treatment agent in the magnetic body is not particularly limited, which may be added to the extent that a magnetic body capable of satisfying the aforementioned conditions, for example, the size of magnetic domains and/or the average particle diameter of magnetic particles can be produced. For example, in the magnetic body, the surface treatment agent may be included in a ratio in the range of 0.01 parts by weight to 30 parts by weight relative to 100 parts by weight of the magnetic particles. Under this ratio, a magnetic body having a desired calorific property can be obtained. In another example, the ratio may be 0.1 parts by weight or more, 1 part by weight or more, 2 parts by weight or more, 3 parts by weight or more, or 4 parts by weight or more, and may be 27 parts by weight or less, 25 parts by weight or less, 23 parts by weight or less, 21 parts by weight or less, or 20 parts by weight or less. On the other hand, the ratio of the surface treatment agent does not significantly affect the average particle diameter of the previously formed magnetic particles, so that when the ratio of the surface treatment agent exceeds the appropriate range, specifically, even if the ratio exceeds the above range, it does not affect the physical properties such as the size of magnetic particles.

Unless otherwise specified in the present application, the unit "part by weight" means the ratio of the weight between the respective components.

A method of surface-treating the magnetic particles with the surface treatment agent to obtain the magnetic body is not particularly limited. For example, the magnetic particles and the surface treatment agent are mixed under an appropriate environment such as the presence of a solvent, thereby inducing an interaction between the magnetic particles and the surface treatment agent and being capable of forming bonds between the magnetic particles and the surface treatment agent as described above. Such a surface treatment agent may be present on the surface of the magnetic particles, specifically on periphery of the magnetic particles. In addition, the magnetic body may be manufactured by applying the detailed method of the present application to be described below.

The magnetic particles may be additionally surface-treated. In this case, the above-mentioned surface treatment agent may be referred to as a primary surface treatment agent, and the surface treatment agent applied for additional surface treatment may be referred to as a secondary surface treatment agent. That is, in one example, the magnetic body of the present application may further comprise the surface treatment agent (primary surface treatment agent) or a secondary surface treatment agent forming bonds with the magnetic particles. That is, when the magnetic body further comprises a secondary surface treatment agent, the secondary surface treatment agent may be introduced to the surface of the magnetic particles and/or to the surface of the primary surface treatment agent treated on the surface of the magnetic particles.

When such a secondary surface treatment agent is mainly applied to the magnetic body, it is generally applied to impart its dispersion stability, cohesiveness and anti-settling properties, and the like thereto, rather than to control the particle properties of the magnetic particles constituting the magnetic body. In addition, the properties of the secondary surface treatment agent may be appropriately changed depending on the compatibility with the material that can be mixed with the magnetic body, and the function of the material.

A polymer compound may be used as the secondary surface treatment agent. For example, a polymer compound

having a weight average molecular weight in the range of about 1,000 to 500,000 may be applied as the secondary surface treatment agent. In the case where the secondary surface treatment agent is a polymer compound, in another example, its molecular weight (Mw) may be about 1500 or more, 2000 or more, 2500 or more, 3000 or more, 3500 or more, 4000 or more, 4500 or more, 5000 or more, 5500 or more, 6000 or more, 6500 or more, 7000 or more, 7500 or more, 8000 or more, 8500 or more, 9000 or more, 9500 or more, 10000 or more, 12000 or more, 14000 or more, 16000 or more, 18000 or more, 19000 or more, or 20000 or more, or may also be 450000 or less, 400000 or more, 350000 or less, 300000 or less, 250000 or less, 200000 or less, 150000 or less, 100000 or less, 90000 or less, 80000 or less, 70000 or less, 60000 or less, 50000 or less, 40000 or less, 30000 or less, or 25000 or less or so.

The polymer compound that can be used as a secondary surface treatment agent may be a polyurethane-based surface treatment agent, a polyurea-based surface treatment agent, a poly(urethane-urea)-based surface treatment agent and/or a polyester-based (specifically branched polyester-based) surface treatment agent. As the secondary surface treatment agent, a compound containing a functional group that interacts with the primary surface treatment agent and/or the magnetic particles with regard to the above-mentioned polymer compound may be applied, or if the functional group is not included, the secondary surface treatment can also be performed by introducing such a functional group into a specific polymer compound and applying it thereto.

As the secondary surface treatment agent, a compound having a functional group that interacts with the primary surface treatment agent and/or magnetic particles may be applied, and such functional groups can be exemplified by the aforementioned phosphoric acid group, carboxyl group, sulfonic acid group, amino group and/or cyano group, and the like, or the secondary or tertiary amine group or amino group, or urea bond, and the like, but is not limited thereto.

In one example, as the secondary surface treatment agent, a polymer comprising a urea unit and/or a urethane unit may also be applied.

Here, the urea unit may be represented by the following formula D, and the urea unit may be represented by the following formula E:

[Formula D]

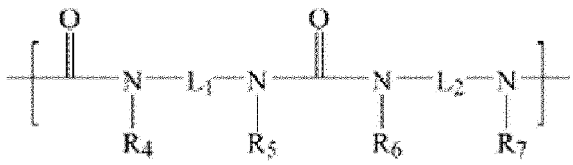

In Formula D, $R_4$ to $R_7$ are each independently a hydrogen atom or an alkyl group, and $L_1$ and $L_2$ are each independently an aliphatic, alicyclic or aromatic divalent residue.

[Formula E]

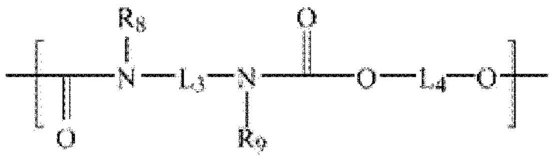

In Formula E, $R_8$ and $R_9$ are each independently a hydrogen atom or an alkyl group, and $L_3$ and $L_4$ are each independently an aliphatic, alicyclic or aromatic divalent residue.

The unit of Formula D is a so-called urea unit, which may be a reaction product of a polyamine and a diisocyanate compound. Thus, for example, in Formula D above, $L_1$ may be a structure derived from a diisocyanate compound participating in the reaction, and $L_2$ may be a structure derived from a polyamine participating in the reaction. Here, the "structure derived" may be, in the case of $L_1$, a structure excluding an isocyanate group from the diisocyanate compound, and may be, in the case of $L_2$, a structure of a portion excluding an amine group ($-NH_2$) from the polyamine compound.

The unit of Formula E is a so-called urethane unit, which may be a reaction product of a polyol and a diisocyanate compound. Thus, for example, in Formula E above, $L_3$ may be a structure derived from a diisocyanate compound participating in the reaction, and $L_4$ may be a structure derived from a polyol participating in the reaction. Here, the "structure derived" may be, in the case of $L_3$, a structure excluding an isocyanate group from the diisocyanate compound,

and may be, in the case of $L_4$, a structure of a portion excluding a hydroxyl group (-OH) from the polyol.

The diisocyanate compound capable of forming the structures of Formulas D and E can be exemplified by tolylene diisocyanate, xylene diisocyanate, diphenylmethane diisocyanate, hexamethylene diisocyanate, isoborone diisocyanate, tetramethylxylene diisocyanate or naphthalene diisocyanate, and the like, but is not limited thereto.

In addition, the polyamine capable of forming the structure of Formula D can be exemplified by an alkylenediamine having an alkylene unit with 1 to 20, 1 to 16, 1 to 12, 1 to 8, or 1 to 4 carbon atoms, such as ethylenediamine or propylenediamine, but is not limited thereto.

Furthermore, the polyol capable of forming the structure of Formula E can be exemplified by an alkylene glycol having an alkylene unit with 1 to 20, 1 to 16, 1 to 12, 1 to 8, or 1 to 4 carbon atoms, such as ethylene glycol or propylene glycol, but is not limited thereto.

Therefore, polyurethane and/or polyurea or poly(urethane-urea) prepared by appropriately combining the known monomers as above may be applied as the secondary surface treatment agent. If necessary, it may also be applied after introducing a necessary functional group into the polyurethane and/or polyurea or poly(urethane-urea), and the like by a known chemical method.

As the secondary surface treatment agent, a compound with or without an appropriate acid value and/or amine value may be applied depending on the type of the compound mixed with the magnetic body. In one example, the secondary surface treatment agent may have an acid value in a range of 10 mgKOH/g to 400 mgKOH/g, or an amine value in a range of 5 mgKOH/g to 400 mgKOH/g.

In another example, the acid value of the surface treating agent may be about 20mgKOH/g or more, 30mgKOH/g or more, 40mgKOH/g or more, 50mgKOH/g or more, 60mgKOH/g or more, 70mgKOH/g or more, 80mgKOH/ or more, or 90mgKOH/g or more, or may also be about 390mgKOH/g or less, 380mgKOH/g or less, 370mgKOH/g or less, 360mgKOH/g or less, 350mgKOH/g or less, 340mgKOH/g or less, 330mgKOH/g or less, 320mgKOH/g or less, 310mgKOH/g or less, 300mgKOH/g or less, 290mgKOH/g or less, 280mgKOH/g or less, 270mgKOH/g or less, 260mgKOH/g or less, 250mgKOH/g or less, 240mgKOH/g or less, 230mgKOH/g or less, 220mgKOH/g or less, 210mgKOH/g or less, 200mgKOH/g or less, 190mgKOH/g or less, 180mgKOH/g or less, 170mgKOH/g or less, 160mgKOH/g or less, 150mgKOH/g or less, 140mgKOH/g or less, 130mgKOH/g or less, 120mgKOH/g or less, 110mgKOH/g or less, or 100mgKOH/g, 90mgKOH/g or less, 80mgKOH/g or less, 70mgKOH/g or less, 60mgKOH/g or less, 50mgKOH/g or less, 40mgKOH/g or less, or 30 mgKOH/g or less or so.

In another example, the amine value of the surface treatment agent may be about 10mgKOH/g or more, about 15mgKOH/g or more, about 20mgKOH/g or more, 30mgKOH/g or more, 40mgKOH/g or more, 50mgKOH/g or more, 60mgKOH/g or more, 70mgKOH/g or more, 80mgKOH/g or more, or 90mgKOH/g or more, or may also be about 390mgKOH/g or less, 380mgKOH/g or less, 370mgKOH/g or less, 360mgKOH/g or less, 350mgKOH/g or less, 340mgKOH/g or less, 330mgKOH/g or less, 320mgKOH/g or less, 310mgKOH/g or less, 300mgKOH/g or less, 290mgKOH/g or less, 280mgKOH/g or less, 270mgKOH/g or less, 260mgKOH/g or less, 250mgKOH/g or less, 240mgKOH/g or less, 230mgKOH/g or less, 220mgKOH/g or less, 210mgKOH/g or less, 200mgKOH/g or less, 190mgKOH/g or less, 180mgKOH/g or less, 170mgKOH/g or less, 160mgKOH/g or less, 150mgKOH/g or less, 140mgKOH/g or less, 130mgKOH/g or less, 120mgKOH/g or less, 110mgKOH/g or less, or 100mgKOH/g or less, 90mgKOH/g or less, 80mgKOH/g, 70mgKOH/g, 60mgKOH/g or less, 50mgKOH/g or less, 40mgKOH/g or less, or 30mgKOH/g or less or so.

In another example, the secondary surface treatment agent may be a compound having no acid value and/or amine value. In the present application, no acid value or amine value means a case where the acid value or amine value is about 5mgKOH/g or less, 4 mgKOH/g or less, 3 mgKOH/g or less, 2 mgKOH/g or less, 1 mgKOH/g or less, or 0.5 mgKOH/g or less, or substantially 0 mgKOH/g. As described above, the surface treatment agent without any acid value and/or amine value may be effective when the magnetic body has been blended with an epoxy resin or the like.

As the secondary surface treatment agent, a branched polyester surface treatment agent known as a so-called branched polyester-based dispersant or the like may also be applied.

In the magnetic body, the secondary surface treatment agent may be included in a ratio of 0.01 parts by weight to 30 parts by weight relative to 100 parts by weight of the magnetic particles. Under such a ratio, a magnetic body having a desired performance may also be formed. In another example, the ratio may be about 0.5 parts by weight or more, 1 part by weight or more, 1.5 parts by weight or more, 2 parts by weight or more, 2.5 parts by weight or more, 3 parts by weight or more, 3.5 parts by weight or more, 4 parts by weight or more, or 5 parts by weight or more, or may also be about 25 parts by weight or less, 20 parts by weight or less, 15 parts by weight or less, about 13 parts by weight or less, about 12 parts by weight or less, or about 10 parts by weight or less or so.

The method of surface-treating magnetic particles with the secondary surface treatment agent is not particularly limited. For example, the magnetic body may be prepared by mixing the magnetic particles (or the magnetic particles treated with the primary surface treatment agent) and the secondary surface treatment agent in an appropriate environment such as the presence of a solvent.

The magnetic body of the present application comprises a plurality of magnetic particles, so that in one example,

it may exist in a powder form. In this case, when the magnetic body of the present application is applied to curing of, for example, a curable (specifically thermosetting) resin, the magnetic body may maintain, upon being present in the form of a powder, an excellently dispersed state in the composition having the resin and the magnetic body, and as a result, there is an advantage that the curing of the resin can proceed more smoothly.

The magnetic body of the present application may exhibit excellent magnetic properties and calorific properties.

In one example, the magnetic body may have a saturation magnetization value within a specific range. The saturation magnetization value of the magnetic body may be in the range of 20 emu/g to 150 emu/g. When the saturation magnetization value of the magnetic body is within the above range, heat may be generated by the magnetic body, specifically, vibration between the magnetic particles included in the magnetic body, instead of the eddy current of the magnetic body, upon application of an electromagnetic field to the magnetic body, and as a result, a high amount of heat can be generated uniformly.

In one example, the magnetic body may have a coercive force within a specific range. Specifically, the coercive force of the magnetic body may be in the range of 1 kOe to 200 kOe. Here, the term "coercive force" may mean an intensity of the critical magnetic field required to reduce the magnetization of the magnetic particles to zero. That is, the magnetic body magnetized by an external magnetic field maintains a certain degree of magnetized state even when the magnetic field is removed, where the intensity of a magnetic field capable of making the magnetization degree to zero by applying a reverse magnetic field to the magnetic body thus magnetized is referred to as a coercive force. The coercive force may be a criterion for distinguishing soft magnetic materials or hard magnetic materials, and the magnetic body of the present application may be a soft magnetic powder. In the present application, by adjusting the coercive force of the magnetic body within the above range, magnetic conversion of the magnetic body may be more easily implemented, and as a result, vibrational heat of the desired degree in the present application may be generated.

In the present application, physical properties of a magnetic body may be measured using a VSM (vibrating sample magnetometer). The VSM is a device that measures magnetization values of samples by recording the magnetic field applied by a Hall probe and recording the electromotive force obtained on applying vibration to the sample by Faraday's law. According to Faraday's law, it can be seen that if the N pole of a bar magnet is directed and pushed towards the coil, the galvanometer moves and the current flows through the coil. The resultant current is called induction current, which was made by induced electromotive force. The VSM is a method of detecting the induced electromotive force, which occurs on vibrating a sample by such a basic operation principle, in the search coil, to measure the magnetization value of the sample by this electromotive force. The magnetic characteristics of a material can be measured simply as functions of magnetic field, temperature and time, and quick measurement in a magnetic force of up to 2 Tesla (T) and a temperature range of 2 K to 1,273 K is possible.

The magnetic body of the present application may also have a specific surface area within a specific range. Specifically, the magnetic body of the present application may have a BET specific surface area in the range of 3 $m^2$/g to 25 $m^2$/g.

In the present application, the BET specific surface area may be the specific surface area of the magnetic particles measured according to the BET (Brunauer-Emmett-Teller) adsorption isotherm equation, specifically, the adsorption isotherm equation introduced as a model for multi-molecular layer adsorption. The parameters of the BET equation and methods for measuring the specific surface area through the BET equation are variously known in the industry. Through the BET specific surface area, the size of pores formed by the magnetic particles in the magnetic body, the size of the magnetic particles, the particle diameter distribution of the magnetic particles, and the like can be confirmed.

The magnetic body of the present application may also have excellent calorific properties. For example, the magnetic body may have an SAR value of 60 W/g or more calculated according to Equation 2 below:

[Equation 2]

$$SAR = CiXmX\Delta T/\Delta t$$

In Equation 2 above, SAR means the calorific value of the magnetic fluid in which the magnetic body is dissolved in water, Ci is the specific heat of water as the solvent of the magnetic fluid, which is 4.184 J (gXK), m is the ratio (mi/ma) of the weight of water as the solvent of the magnetic fluid (mi, unit: g) to the weight (ma, unit: g) of the magnetic body, $\Delta$T is the temperature increase amount (unit: K) of the magnetic fluid when an alternating magnetic field has been applied to 0.35 mL of the magnetic fluid at a temperature of 294 K under conditions of a current of 120.4 A and 310 kHz for 60 seconds, and $\Delta$t is the time for which the alternating magnetic field of the above conditions is applied to the magnetic fluid, which is 60 seconds.

When an alternating magnetic field of a certain intensity has been applied to a specific amount of the magnetic

body, the SAR value is a standardized value of the heat generated by the magnetic body. It is understood that if the above value is to be at least 60 W/g, the desired calorific characteristic can be implemented in the present application. In another example, the SAR value may be 63 W/g or more, 65 W/g or more, 67 W/g or more, or 70 W/g or more, and may be 120 W/g or less, 115 W/g or less, or 110 W/g or less. In particular, the upper limit of the SAR value may also vary depending on the type of solvent applied to measure the value. Also, in the present application, water has been applied as a solvent in order to measure the SAR value, where the upper limit (120 W/g) of the numerical value may mean the SAR value that can appear at the maximum when the solvent applied to measure the value is water.

Since the magnetic body exhibits excellent calorific properties when an external force, specifically, an external magnetic field has been applied, it may be advantageous for curing a thermosetting polymer (or resin).

Therefore, in another aspect, the present application relates to a curable composition.

The curable composition may mean a composition that can be cured by an external force, for example, application of heat or irradiation of light, and the like. Therefore, the curable composition of the present application comprises at least a material that can be cured by an external force.

The curable composition comprises a curable resin and a magnetic body. In addition, the magnetic body applied to the curable composition is the magnetic body of the present application. Therefore, even in the description of the curable composition of the present application, all descriptions of the properties of the magnetic body may be applied. At this time, the magnetic body in the composition may exhibit an appropriate degree of dispersion, and as a result, the curable composition may be applied to a curing process even though it has low viscosity and fluidity.

For example, the curable composition may have a viscosity at room temperature of 10,000 cP or less, measured under a condition of a shear ratio of 100 $s^{-1}$. In another example, the viscosity of the curable composition may be 9500 cP or less, 9,000 cP or less, 8500 cP or less, 8,000 cP or less, 7500 cP or less, 7,000 cP or less, 6500 cP or less, 6,000 cP or less, 5500 cP or less, 5,000 cP or less, 4500 cP or less, 4,000 cP or less, 3,000 cP or less, 2,000 cP or less, 1,000 cP or less, 900 cP or less, or 800 cP or less, or may also be 1 cP or more, 2 cP or more, 3 cP or more, 4 cP or more, 5 cP or more, 6 cP or more, 7 cP or more, 8 cP or more, 9 cP or more, 10 cP or more, 15 cP or more, 20 cP or more, 25 cP or more, 30 cP or more, 35 cP or more, 40 cP or more, 45 cP or more, 50 cP or more, 55 cP or more, 60 cP or more, 65 cP or more, 70 cP or more, 75 cP or more, 80 cP or more, 85 cP or more, 90 cP or more, 95 cP or more or 100 cP or more, 1000 cP or more, 1500 cP or more, 2000 cP or more, 2500 cP or more, 3000 cP or more, 3500 cP or more, or 4000 cP or more.

The curable composition of the present application may be an insulating composition. That is, the curable composition may have insulation or may form a cured product exhibiting insulation after curing. In the present application, the term "insulation" means a case where the dielectric breakdown strength as determined by ASTM D149 standard is 10 kV/mm or more, 11 kV/mm or more, 12 kV/mm or more, 13 kV/mm or more, 14 kV/mm or more, 15 kV/mm or more, 16 kV/mm or more, 17 kV/mm or more, 18 kV/mm or more, 19 kV/mm or more, or 20 kV/mm or more. Therefore, the curable composition of the present invention in itself can exhibit the above dielectric breakdown strength or can be cured to form a cured product that exhibits the above dielectric breakdown strength. The higher the value of the dielectric breakdown strength, it means that it has more excellent insulation, where the upper limit is not particularly limited, but in one example, it may be about 50 kV/mm or less, 45 kV/mm or less, 40 kV/mm or less, 35 kV/mm or less, 30 kV/mm or less, 25 kV/mm or less, or 20 kV/mm or less. The dielectric breakdown strength is a value measured in accordance with ASTM D149 standard for the curable composition in a film form or a cured product of the curable composition in a film form, and unless otherwise specified, the unit is kV/mm. The dielectric breakdown strength may be achieved through adjustment of the type and/or ratio of the curable resin and/or magnetic body, which are components of the curable composition.

The kind of the curable resin that can be included in the curable composition is not particularly limited. For example, as the curable resin, a so-called "thermosetting resin" that participates in the curing reaction by application of heat can be applied. In addition, the curable resin is a so-called insulating resin, and a resin capable of exhibiting the above-described insulation (dielectric breakdown strength) before and/or after curing can be applied.

The curable resin may comprise a curable functional group. Specifically, the curable functional group may be exemplified by an alkenyl group, an acryloyl group, a methacryloyl group, an acryloyloxy group, a methacryloyloxy group, an acryloyloxyalkyl group, a methacryloyloxyalkyl group, an epoxy group, an oxetane group, an alkenyl group, a hydrogen atom bonded to a silicon atom, an isocyanate group, a hydroxyl group, a phthalonitrile group or a carboxyl group, and the like, but is not limited thereto.

The "alkenyl group" means an alkenyl group having 2 to 20, 2 to 16, 2 to 12, 2 to 8, or 2 to 4 carbon atoms, unless otherwise specified. The alkenyl group may be linear, branched or cyclic, and may be optionally substituted with one or more substituents.

The "epoxy group" may mean a cyclic ether having three ring constituent atoms or a monovalent moiety derived from a compound containing the cyclic ether unless otherwise specified. The epoxy group may be exemplified by a glycidyl group, an epoxyalkyl group, a glycidoxyalkyl group or an alicyclic epoxy group, and the like. Here, the alicyclic epoxy group may mean a monovalent residue derived from a compound containing an aliphatic hydrocarbon ring structure

and including a structure in which two carbon atoms forming the aliphatic hydrocarbon ring also form an epoxy group. As the alicyclic epoxy group, an alicyclic epoxy group having 6 to 12 carbons may be exemplified, and for example, a 3,4-epoxycyclohexylethyl group and the like may be exemplified.

The specific kind of the curable resin is not particularly limited. For example, the curable resin may be a resin having a linear or branched structure including the aforementioned curable functional group, and specifically, may be exemplified by a polysilicon resin, polyimide, polyetherimide, polyesterimide, an acrylic resin, a vinyl-based resin, an olefin resin, a polyurethane resin, an isocyanate resin, an acrylic resin, a polyester resin, a phthalonitrile resin, polyamic acid, polyamide or an epoxy resin, and the like.

The content of the magnetic body in the curable composition is not particularly limited. The content of the magnetic body in the curable composition may be appropriately adjusted in consideration of the heat required for curing the relevant curable composition, specifically, the curable resin. In one example, the curable composition may comprise the magnetic body in a content of 0.01 parts by weight to 60 parts by weight relative to 100 parts by weight of the curable resin. In another example, the ratio of the magnetic body may be about 0.5 parts by weight or more or about 1 part by weight or more, about 3 parts by weight or more, or about 5 parts by weight or more, or may also be about 55 parts by weight or less, about 50 parts by weight or less, about 45 parts by weight or less, about 40 parts by weight or less, about 35 parts by weight or less, about 30 parts by weight or less, about 25 parts by weight or less, about 20 parts by weight or less, about 15 parts by weight or less, or about 10 parts by weight or less or so. The curable resin, which is a reference in calculating the content of the magnetic body, comprises a component that is in a resin state, as well as a component that is not in a resin state, but can form a resin by curing.

The curable composition may further comprise, in addition to the above-described components, any additive required in the curable composition. Such an additive may be exemplified by a curing agent or a catalyst for assisting curing of the curable resin, an initiator such as a radical initiator or a cationic initiator, a thixotropic agent, a leveling agent, a defoaming agent, an antioxidant, a radical-generating material, organic and inorganic pigments or dyes, a dispersant, various fillers such as a thermally conductive filler or an insulating filler, a functional polymer or a light stabilizer, and the like.

The magnetic body satisfying the above-described properties has excellent calorific properties, so that when it is applied to the curable composition in such a manner, various advantages can be provided for curing the curable composition. For example, through the application of the magnetic body, the curable composition of the present application may be cured at a high speed, and moreover, may also be cured with an excellent filling rate even in a narrow curing space.

Subsequently, the method for manufacturing the magnetic body is described in more detail.

The present inventors have confirmed that when a magnetic body is produced by applying a specific method, the magnetic body exhibiting the above-described characteristics can be obtained in a higher yield, in an easy manner, and the like, and have arrived at the present invention.

The method for manufacturing a magnetic body of the present application comprises at least a first step of generating crystals of magnetic particles using a specific raw material; a second step of clustering the crystals generated in the first step; and a third step of mixing the raw material having the clustered crystals with a surface treatment agent. The method of the present application proceeds at least the above steps in the above order.

In the first step, a raw material including a magnetic particle precursor and a polar solvent is heated to form crystals. When a raw material comprising at least a precursor of magnetic particles and a polar solvent is heated, crystals constituting the magnetic particles are formed. Specifically, when the raw material is heated, the polar solvent acts as a reducing agent to induce a hydrolysis and condensation reaction of the magnetic particle precursor, and as a result, the magnetic particle precursor forms an amorphous solid. Subsequently, if heating is continued, the amorphous solid causes a phase change and becomes crystalline.

The magnetic particle precursor may mean a material capable of forming magnetic particles through a specific reaction. The reaction of generating magnetic particles with the magnetic particle precursor proceeds by heating a raw material comprising at least the magnetic particle precursor and the organic solvent.

The description of the magnetic particles is the same as described above. The precursor of the magnetic particles may be applied without limitation as long as it is a compound capable of forming the magnetic particles through hydrolysis, dehydration, reduction and phase transition of the precursor, and the like. For example, when the magnetic particle is $FeOFe_2O_3$, the precursor of the magnetic particle may be $FeCl_3$, $Fe(NO_3)_3$, Fe(CO)s, $Fe(NO_3)_2$, $Fe(SO_4)_3$ or $Fe(AcAc)_3${iron (III) acetylacetonate}, and the like.

The content of the magnetic particle precursor may also be appropriately adjusted. For example, the content of the magnetic particle precursor in the raw material may be in the range of 0.025 M to 0.125 M. In another example, the content may be 0.03 M or more, 0.04 M or more, or 0.05 M or more, and may be 0.120 M or less, 0.115 M or less, or 0.1 M or less.

The organic solvent contained in the raw material may be, for example, a polar organic solvent. As the polar organic solvent, any known polar solvent can be applied without limitation, as long as it can dissolve the magnetic particle precursor at an appropriate level.

The polar organic solvent may be applied as a reducing agent for the magnetic particle precursor. Therefore, the polar organic solvent may also optionally be referred to as a "reducing polar solvent". The "polar solvent" may mean a solvent having a dielectric constant at a particular temperature, for example 25°C, in the range of approximately 75 to 85. From the viewpoint of smoothly dissolving the precursor of the magnetic particles in the raw material, and applying the reducing agent for the phase transition of the magnetic particle precursor to the magnetic particles, specifically, the reduction reaction of the magnetic particle precursor, it is advantageous that as the organic solvent, a polyol is applied. Therefore, the raw material may comprise a magnetic particle precursor and a polyol. The polyol is a compound having two or more hydroxy groups (-OH).

As the polyol, a so-called low molecular weight polyol such as ethylene glycol, glycerin, butanediol and trimethylol propane; and a high molecular weight polyol such as polyethylene glycol and methoxypolyethylene glycol, and the like may be applied. Here, the low molecular weight polyol may mean a monomolecular polyol, and the high molecular weight polyol may mean a polyol having a molecular weight (weight average molecular weight) of 2,000 or less, among high molecular weight polyols.

The raw material may comprise an organic solvent (e.g., polyol) as a main component. That is, the content of the organic solvent in the raw material may be 50% or more, 55% or more, 60% or more, 65% or more, 70% or more, 75% or more, 80% or more, 85% or more, or 90%, and may be about 100%, 99% or less, 98% or less, 97% or less, 96% or less, or 95% or less, on the basis of a weight.

The method of the present application comprises the step (second step) of clustering the crystals generated in the first step. The clustering may refer to a unit in which the crystals or magnetic domains are densely aggregated (or agglomerated) to form one particle unit. In the method of the present application, magnetic particles are formed by forming crystals of magnetic particles with a magnetic particle precursor in the first step, and clustering the crystals in the second step.

The method of clustering the crystals is not particularly limited. For example, the clustering of the crystals may proceed by heat-treating (or heating) the resultant product of the first step, that is, the raw material, in which the crystals are formed, at a predetermined temperature. According to the heat treatment result, the crystals formed in the first step form clusters to constitute magnetic particles. The specific process of the second step will be described below.

The method of the present application comprises a step (third step) of mixing the raw material that has passed through the first and second steps with a surface treatment agent. As the surface treatment agent, all of the foregoing can be applied. When the raw material that has passed through the first and second steps is mixed with a surface treatment agent, the magnetic body comprising magnetic particles having crystals with a specific size and having the average particle diameter and the variation coefficient of the particle diameter within a specific range, and the surface treatment agent introduced to the surface of the particles, is created.

If the raw material is not mixed with the surface treatment agent, or even if it is mixed therewith, but the raw material and the surface treatment agent are mixed at the time point before the second step, specifically, at the first step or in the process of clustering the crystals generated in the first step, a magnetic body with the above-described characteristics is not manufactured. The magnetic body manufactured in this way has a form in which the surface treatment agent is not introduced thereto or, even if introduced, is introduced into the surface of crystals constituting the magnetic particles rather than the surface of the magnetic particles. This magnetic body does not exhibit the desired calorific properties in the present application.

Meanwhile, in the method of the present application, the time point for mixing the surface treatment agent is specifically specified. Through this, a magnetic body having the above-described characteristics may be manufactured. That is, as in the third step, when the crystals are formed through a precursor of magnetic particles, and the crystals are clustered, and then mixed with the surface treatment agent, a magnetic body having the desired calorific properties in the present application can be manufactured.

Hereinafter, the respective steps of the respective methods of the present application will be described in more detail.

The method of the present application may perform, in the first step, a phase change reaction of a magnetic particle precursor to a magnetic particle, specifically, a reduction reaction. The reaction to the magnetic particles proceeds through hydrolysis, dehydration and reduction processes of the magnetic particle precursor, and the like. Therefore, the raw material applied in the first step may comprise additional materials in addition to the magnetic particle precursor and the polar solvent.

In the first step, hydrolysis of the magnetic particles may proceed. Therefore, the reaction in which the magnetic particle precursor forms crystals may proceed at least in the presence of an aqueous solvent. That is, the raw material applied in the first step may further comprise an aqueous solvent.

As the aqueous solvent, water or other polar solvents can be applied, and typically, can be exemplified by water.

The ratio of the aqueous solvent is not limited. For example, the raw material may comprise the aqueous solvent in a content within the range of 1 vol% to 30 vol% relative to the volume of the organic solvent. In another example, the content may be 2 vol% or more, 3 vol% or more, 4 vol% or more, or 5 vol% or more, and may be 25 vol% or less, 20

vol% or less, or 15 vol% or less.

The phase transition of the magnetic particle precursor to the magnetic particle, specifically, the reduction reaction may proceed through a reaction between the precursor of the magnetic particle and a base. Therefore, the raw material may further comprise a base (a basic compound) in addition to the precursor of the magnetic particles, the organic solvent and the aqueous solvent.

The kind of base applied in the method of the present application is not particularly limited. As the base, a compound known in the art to show basicity, that is, a compound capable of emitting a hydroxide ion (-OH) or absorbing a hydrogen ion ($H^+$) in aqueous solution, or a compound having a pH more than approximately 7 can be applied without limitation. As the base, for example, a strong basic compound such as sodium oxide and potassium hydroxide; or a weak basic compound such as sodium carbonate, sodium hydrogen carbonate, cesium carbonate, calcium carbonate, aqueous ammonia or sodium acetate may be applied, and in the examples of the present application, sodium acetate has been applied as the base.

The content of the base in the raw material is also non-limiting. The raw material may comprise a base in a content within the range of 0.4 M to 2.0 M. In another example, the content may be 0.5 M or more, 0.6 M or more, or 0.7 M or more, and may be 1.9 M or less, 1.8 M or less, 1.7 M or less, 1.6 M or less, 1.5 M or less, 1.4 M or less, 1.3 M or less, 1.2 M or less, or 1.1 M or less.

In the method of the present application, the first to third steps represented by the above steps, specifically the step of forming magnetic crystals, the step of clustering the crystals and the step of treating the surface of the magnetic particles, respectively, can each proceed at a temperature within a specific range for a certain range of time.

In the method of the present application, the first step may be performed at a temperature within the range of 50°C to 90°C. That is, the first step may be performed while heating the raw material at a temperature within the range. The crystals constituting the magnetic particles may be appropriately formed within the temperature range. In another example, the temperature condition of the first step may be 55°C or more, 60°C or more, 65°C or more, or 70°C or more, and may be 85°C or less, 80°C or less, 75°C or less, or 70°C or less.

In the method of the present application, the first step may be performed through at least two processes. For example, the first step may proceed through a method comprising (1-a) a process of raising the temperature of the raw material to a temperature in the range of 50°C to 90°C and (1-b) a process of maintaining the temperature of the raised raw material for a period of time in the range of 30 minutes to 120 minutes. That is, when the raw material is heated to form crystals from a precursor of magnetic particles, the raw material heated to a specific temperature is maintained at that temperature for an appropriate time, whereby magnetic domains (or crystals) can be formed more smoothly.

In another example, the raised temperature of the raw material in the process (1-a) may be 55°C or more, 60°C or more, 65°C or more, or 70°C or more, and may be 85°C or less, 80°C or less, 75°C or less, or 70°C or less.

The time to maintain the temperature of the raised raw material in the process (1-b) may be 35 minutes or more, 40 minutes or more, 45 minutes or more, 50 minutes or more, 55 minutes or more, or 60 minutes or more, and may be 110 minutes or less, 100 minutes or less, 90 minutes or less, 80 minutes or less, 70 minutes or less, or 60 minutes or less.

The temperature increase rate for raising the temperature of the raw material in the process (1-a) may also be appropriately adjusted. For example, in the method of the present application, the process (1-a) in the first step may be performed at a temperature increase rate within the range of 0.5°C/min to 2°C/min.

In the method of the present application, the second step, specifically, the step of clustering the crystals generated in the first step may also be performed at a temperature within a specific range. For example, in the method of the present application, the second step may be performed at a temperature within the range of 170°C to 210°C. It is possible to appropriately form magnetic particles having a particle diameter that satisfies the above-described average and variation coefficient while having magnetic domains having the above-described size within the temperature range. In another example, the temperature condition of the second step may be 175°C or higher, 180°C or higher, 185°C or higher, or 190°C or higher, and may be 205°C or lower, 200°C or lower, 195°C or lower, or 190°C or lower.

In the method of the present application, the second step may also proceed through at least two processes like the first step.

For example, the second step may proceed through a method comprising (2-a) a process of raising the temperature of the raw material to a temperature within the range of 170°C to 210°C and (2-b) a process of maintaining the temperature of the raised raw material for a period of time in the range of 12 hours to 80 hours. That is, in the process of clustering the crystals, the raw material heated to a specific temperature is maintained at that temperature for an appropriate time, whereby the clustering of the crystals can proceed more smoothly.

In another example, the raised temperature in the process (2-a) may be 175°C or more, 180°C or more, 185°C or more, or 190°C or more, and may be 205°C or less, 200°C or less, 195°C or less, or 190°C or less.

In another example, the time for maintaining the temperature of the raised raw material in the process (2-b) may be 16 hours or more, 20 hours or more, or 24 hours or more, and may be 64 hours or less, 48 hours or less, 32 hours or less, or 24 hours or less.

The temperature increase rate for raising the temperature of the raw material in the process (2-a) may also be appropriately adjusted. For example, in the method of the present application, the process (2-a) in the second step may be performed at a temperature increase rate within the range of 1.5°C/min to 5°C/min.

In the method of the present application, the third step, specifically, the step of mixing the clusters of crystals with the surface treatment agent may also be performed within a specific temperature range. In the method of the present application, the third step may be performed at a temperature within the range of 50°C to 90°C. The interaction between the magnetic particles and the surface treatment agent may proceed smoothly within the above temperature range. In another example, the temperature may be 55°C or higher, 60°C or higher, 65°C or higher, or 70°C or higher, and may be 85°C or lower, 80°C or lower, 75°C or lower, or 70°C or lower.

As the surface treating agent, for example, a powdery surface treating agent can be applied. In this case, the surface treatment agent can be dissolved in a solvent such as water and applied in the form of a solution, where the third step of mixing it with magnetic particles may proceed within the above-described temperature range from the viewpoint of ensuring that the surface treatment agent in the powder form works smoothly and the stability of the reaction is ensured.

In the method of the present application, the third step may also proceed as more detailed processes like the first and second steps. Specifically, in the method of the present application, the third step may proceed at least through processes of mixing the raw material that has passed through the second step with the surface treatment agent, cooling the raw material mixed with the surface treatment agent to a temperature within a specific range, and maintaining the cooled raw material at that temperature for a specific time. That is, in the method of the present application, the third step may comprise (3-a) a process of mixing the raw material that has passed through the second step with the surface treatment agent, (3-b) a process of colling the raw material mixed with the surface treatment agent to a temperature in the range of 50°C to 90°C and (3-c) a process of maintaining the cooled raw material for a time within the range of 30 minutes to 120 minutes.

The kind, application amount, and the like of the surface treatment agent applied in the process (3-a) are not particularly limited. As the surface treatment agent, the above-described kind of surface treatment agent can be applied. In the method of the present application, the surface treatment agent in the process (3-a) may be mixed in a content within the range of 0.01 parts by weight to 30 parts by weight relative to 100 parts by weight of the magnetic particle precursor. In another example, the content of the surface treatment agent may be 0.1 parts by weight or more, 1 part by weight or more, 2 parts by weight or more, 3 parts by weight or more, or 4 parts by weight or more, and may be 27 parts by weight or less, 25 parts by weight or less, 23 parts by weight or less, 21 parts by weight or less, or 20 parts by weight or less. In the method of the present application, the surface treatment agent is added after the magnetic crystals are clustered, and the surface treatment agent does not affect the size of the average particle diameter of the magnetic particles (cluster of crystals) thus formed, so that even if the content of the surface treatment agent exceeds the appropriate value, factors such as the size of the magnetic particles are not affected.

Since the temperature for clustering the crystals in the second step is lower than the temperature at which the surface treatment agent is mixed in the third step, a cooling process may be usually performed in the third step. For example, the cooling temperature in the process (3-b) may be in the range of 50°C to 90°C. In another example, the temperature may be 55°C or higher, 60°C or higher, 65°C or higher, or 70°C or higher, and may be 85°C or lower, 80°C or lower, 75°C or lower, or 70°C or lower.

In the process (3-b), the temperature reduction rate for reducing the temperature of the raw material may also be appropriately adjusted. For example, in the method of the present application, the process (3-b) in the third step may be performed at a temperature reduction rate within the range of 1.5°C/min to 5°C/min.

As described above, the magnetic body manufactured by the method of the present application may further comprise an additional surface treatment agent, for example, the aforementioned secondary surface treatment agent. Therefore, the method of the present application may further comprise a step of secondary surface treatment with a secondary surface treatment agent after the third step. As the secondary surface treatment agent, the secondary surface treatment agent mentioned in the description of the magnetic body may be applied as it is.

Specifically, the method of the present application may further comprise a step (fourth step) of mixing the magnetic particles surface-treated in the third step with a secondary surface treatment agent that can be combined with the surface treatment agent. For example, when the magnetic particles surface-treated in the third step are mixed with the secondary surface treatment agent and then reacted at an appropriate temperature for an appropriate time, a magnetic body additionally surface-treated with the secondary surface treatment agent can be manufactured.

The application amount of the secondary surface treatment agent is also non-limiting. In the method of the present application, the secondary surface treatment agent in the fourth step may be mixed in a content within the range of 0.01 parts by weight to 30 parts by weight relative to 100 parts by weight of the magnetic particle precursor. In another example, the application amount of the secondary surface treatment agent may be about 0.5 parts by weight or more, 1 part by weight or more, 1.5 parts by weight or more, 2 parts by weight or more, 2.5 parts by weight or more, 3 parts by weight or more, 3.5 parts by weight or more, 4 parts by weight or more, 4.5 parts by weight or more, or 5 parts by

weight or more, or may be about 25 parts by weight or less, 20 parts by weight or less, 15 parts by weight or less, about 13 parts by weight or less, about 12 parts by weight or less, or 10 parts by weight or less or so.

In the method of the present application, a known process necessary for synthesizing or manufacturing other magnetic bodies may be performed in addition to the foregoing. For example, a process of filtering or extracting only a necessary component (magnetic body) from a raw material containing the completely synthesized reaction product may be performed in the method of the present application.

The method of the present application may manufacture a magnetic body satisfying intrinsic particle properties (size of magnetic domains and/or crystals, average particle diameter and variation coefficient of magnetic particles, etc.) through the above-described method. In addition, the magnetic body manufactured by the method of the present application has the characteristics such as coercive force and the specific surface area, so that when a specific electromagnetic field has been applied, there is an advantage to be capable of having excellent calorific characteristics.

**Advantageous Effects**

The magnetic body of the present application may have an excellent calorific value, and at the same time, the calorific value may be uniformly maintained.

In the magnetic body of the present application, the calorific value characteristics can be freely adjusted.

The curable composition of the present application can be easily cured using a magnetic body that satisfies all of the above properties.

The method of the present application can simply manufacture a magnetic body satisfying all of the above characteristics.

**Description of Drawings**

Figure 1 is an X-ray diffraction analysis result of Example 2.

Figure 2 is an X-ray diffraction analysis result of Comparative Example 2.

Figure 3 is a scanning electron microscope (SEM) photograph of Example 1.

Figure 4 is a scanning electron microscope (SEM) photograph of Example 2.

Figure 5 is a scanning electron microscope (SEM) photograph of Comparative Example 1.

Figure 6 is a scanning electron microscope (SEM) photograph of Comparative Example 2.

Figure 7 is a schematic diagram of a stator used for measuring a filling rate.

**Best Mode**

Hereinafter, the present application will be described in detail through examples. However, the protection scope of the present invention is not limited by the examples described below.

1. Measurement of crystal size

Crystal sizes of magnetic particles in the magnetic bodies synthesized in Examples and Comparative Examples were measured according to the following method.

(1) Using Brucker's XRD-07-D8_Endeavor equipment, the signal intensity is measured in the 2Θ diffraction angle section of 10 degrees to 90 degrees of the magnetic body according to the manual of the equipment.

(2) The size of the crystal is measured by substituting the measurement result within the range of 60.824 degrees to 94.957 degrees, specifically, the 2Θ range of 62.57 degrees to the following equation 3. At this time, the half width at the peak was approximately 4.133 degrees (=0.0721 radians).

[Equation 3]

$$\tau=(K\times\lambda)/(\beta\times\cos(\theta))$$

In Equation 3, $\tau$ is the size of the crystal, K is 0.94 as Scherrer constant, $\lambda$ is the wavelength (unit: nm) of the applied X-ray, $\beta$ is approximately 0.0721 radians as the half width of the 62.57 degrees, and $\theta$ is the Bragg diffraction angle.

2. Average particle diameter and shape analysis of magnetic particles

The average particle diameter and shape analysis of the magnetic particles, and the like were performed according to the following order.

(1) A magnetic body is coated on a platinum (Pt) base material using a coater (Sputter Coater 108, Cressington Corporation) in an auto mode for approximately 60 to 90 seconds to prepare a specimen for SEM imaging.

(2) The photograph of the specimen is taken using SEM (FESEM, JSM7610F, JEOL).

(3) Through the SEM photograph of the specimen, the clustering of magnetic particles in the magnetic body, particle diameter characteristics, variation coefficient, and the like are evaluated.

3. Measurement of calorific value of magnetic body

The calorific efficiency (SAR value) of the magnetic body was measured according to the following procedure.

(1) A solution (magnetic fluid) in which 0.5 g of a magnetic body (provided that it is the amount excluding the applied amount of the surface treatment agent) is dispersed in 10 g of water is prepared.

(2) To 0.35 mL of the solution, an alternating magnetic field under current and frequency conditions of 120.4 A and 310 kHz is applied at a temperature of 294 K for about 60 seconds using a commercially available magnetic field application device, and then the temperature of the solution is measured.

(3) The SAR value of Equation 2 below is calculated by substituting the result of the process (2) into the following equation 2:

[Equation 2]

$$SAR = CiXmX\Delta T/\Delta t$$

In Equation 2 above, SAR means the calorific value of the magnetic fluid in which the magnetic body is dissolved in water, Ci is 4.184 J (gXK) as the specific heat of water, which is the solvent of the magnetic fluid, m is the ratio (mi/ma) of the weight (mi, unit: g) of water as the solvent of the magnetic fluid to the weight (ma, unit: g) of the magnetic body, $\Delta T$ is a temperature increase amount (unit: K) of the magnetic fluid when an alternating magnetic field under conditions of a current of 120.4 A and 310 kHz has been applied to 0.35 mL of the magnetic fluid at a temperature of 294 K for 60 seconds, and $\Delta t$ is 60 seconds as the time that the alternating magnetic field under the above conditions is applied to the magnetic fluid.

4. Curing performance of curable composition

The curing performance of the curable composition was evaluated according to the following order.

(1) A curable composition is injected into a container with a capacity of 1 mL.

(2) Using a commercially available solenoid coil (winding diameter: 3 cm, number of turns: 3 turns), an electromagnetic field under conditions of a current of 150 A and a frequency of 310 kHz is applied to the container for 60 seconds.

(3) It is checked visually whether or not the composition is cured.

(4) The relative curing degree of the cured product formed by curing the composition is evaluated by residual enthalpy measured by differential scanning calorimetry (DSC) with respect to the cured product. DSC3+ (Mettler-Toledo) is used as DSC equipment.

5. Filling rate measurement

The filling rate among the curing performance of the curable composition was evaluated in the following order.

(1) A cylindrical stator having the shape shown in Figure 7 is prepared. Specifically, rectangular slots, each opening of which has a width of 5 mm and a length of 20 mm or so, are radially formed in the stator.

(2) To the slots of the stator, 5 windings (copper wire having a circular cross section with a diameter of 4.5 mm or so) are introduced per slot.

(3) The curable composition is injected inside the slot, and the curable composition is filled inside the slot while the stator is properly tilted.

(4) Using a commercially available solenoid coil (winding diameter: 3 cm, number of turns: 3 turns), an electromagnetic field under conditions of a current of 150 A and a frequency of 310 kHz is applied to the stator whose slots are filled with the curable composition for 60 seconds.

(5) The stator is cut in the vertical direction of the longitudinal direction, and the part of the cut surface where the cured product is present is checked using a UV lamp. Through this, the filling rate of the cured product is calculated.

6. Bonding strength measurement

The bonding strength was measured in the following order.

(1) The curable composition is cured in the same manner as described in the measurement of the filling rate.

(2) After connecting the Push & Pull Gauge equipment to a part of the windings, the winding is pulled using the equipment, and then the force when the winding is broken is measured.

7. Measurement of compressive strength

The compressive strength was measured in the following manner.

(1) The curable composition is cured in the same manner as described in the measurement of the filling rate.

(2) After the stator on which the cured product is formed is compressed using a universal testing machine (UTM), the compressive strength thereof is evaluated according to ASTM D 695 standard.

**Example 1. Magnetic body**

A magnetic body was manufactured according to the following procedure.

(1) A raw material is prepared by mixing 0.17 mol of a magnetic particle precursor (iron (III) chloride hexahydrate), 160 mL of an aqueous solvent (distilled water) and 1.80 mol of a base (sodium acetate) with 1500 mL of an organic solvent (ethylene glycol).

(2) At 23°C, the raw material is heated at a temperature increase rate of approximately 0.8°C/min until the temperature reaches 70°C.

(3) The resultant of step (2) is maintained at a temperature of about 70°C for about 1 hour.

(4) Subsequently, at a temperature of 70°C, the raw material is heated at a temperature increase rate of approximately 2°C until the temperature reaches 190°C.

(5) The resultant of step (4) is maintained at a temperature of about 190°C for about 24 hours.

(6) The resultant of step (5) and a surface treatment agent (polyacrylic acid having a weight average molecular weight of about 5,100, Sigma-Aldrich) are mixed. At this time, the surface treatment agent is mixed in an amount of about 4.8 parts by weight relative to 100 parts by weight of the magnetic particle precursor.

(7) At 190°C, the resultant of step (6) is cooled at a temperature reduction rate of approximately 3°C/min until the temperature reaches 70°C.

(8) The resultant of step (7) is maintained at a temperature of about 70°C for about 2 hours.

(9) At 70°C, the resultant of step (8) is cooled at a temperature reduction rate of approximately 1°C until the temperature reaches about 23°C, and the raw material is appropriately filtered to obtain a magnetic body.

**Examples 2 to 5. Magnetic bodies**

Magnetic bodies were prepared in the same manner as in Example 1, except that the compositions of the raw materials were adjusted as shown in Table 1 below.

[Table 1]

| | | Example | | | | |
|---|---|---|---|---|---|---|
| | | 1 | 2 | 3 | 4 | 5 |
| Magnetic particle precursor | Input amount (g) | 40 | 18 | 18 | 18 | 18 |
| | Input amount (mol) | 0.17 | 0.08 | 0.08 | 0.08 | 0.08 |
| Base | Input amount (g) | 148 | 100 | 100 | 100 | 100 |
| | Input amount (mol) | 1.80 | 1.22 | 1.22 | 1.22 | 1.22 |
| Aqueous solvent | Input amount (mL) | 160 | 80 | 80 | 80 | 80 |
| Organic solvent | Input amount (mL) | 1500 | 1520 | 1520 | 1520 | 1520 |
| Surface treatment agent | Type | A | A | B | C | D |
| | Input amount (g) | 1.92 | 3.50 | 3.50 | 3.00 | 3.00 |

*Magnetic particle precursor: Iron(III) chloride hexahydrate, 237.93g/mol
*Base: sodium acetate, 82.03 g/mol
*Aqueous solvent: Distilled water
*Organic solvent: ethylene glycol
*Surface treatment agent A: Polyacrylic acid (molecular weight 5,100, Sigma-Aldrich)
*Surface treatment agent B: Polyacrylic acid (molecular weight 15,000, Sigma-Aldrich)
*Surface treatment agent C: Phosphoric acid-based monomolecular dispersant (CS20A, Croda)
*Surface treatment agent D: Phosphoric acid-based polymer dispersant (Disper-111, BYK)

**Comparative Example 1. Magnetic body**

A magnetic body was manufactured according to the following procedure.

(1) A raw material is prepared by mixing 0.08 mol of a magnetic particle precursor (iron (III) chloride hexahydrate), 80 mL of an aqueous solvent (distilled water), 1.22 mol of a base (sodium acetate) and 3.5 g of a surface treatment agent (polyacrylic acid having a weight average molecular weight of about 5,100, Sigma-Aldrich) with 1520 mL of an organic solvent (ethylene glycol).

(2) At 23°C, the raw material is heated at a temperature increase rate of approximately 0.8°C/min until the temperature reaches 70°C.

(3) The resultant of step (2) is maintained at a temperature of about 70°C for about 1 hour.

(4) Subsequently, at a temperature of 70°C, the raw material is heated at a temperature increase rate of approximately 2°C until the temperature reaches 190°C.

(5) The resultant of step (4) is maintained at a temperature of about 190°C for about 24 hours.

(6) At 190°C, the resultant of step (5) is cooled at a temperature reduction rate of approximately 3°C/min until the temperature reaches 70°C.

(7) The resultant of step (6) is maintained at a temperature of about 70°C for about 2 hours.

(8) At 70°C, the resultant of step (8) is cooled at a temperature reduction rate of approximately 1°C until the temperature reaches about 23°C, and the raw material is appropriately filtered to obtain a magnetic body.

**Comparative Examples 2 to 6. Magnetic bodies**

Magnetic bodies were prepared in the same manner as in Comparative Example 1, except that the compositions of the raw materials were adjusted as shown in Table 2 below.

[Table 2]

| | | Comparative Example | | | | | |
|---|---|---|---|---|---|---|---|
| | | 1 | 2 | 3 | 4 | 5 | 6 |
| Magnetic particle precursor | Input amount (g) | 18 | 36 | 18 | 36 | 18 | 18 |
| | Input amount (mol) | 0.08 | 0.15 | 0.08 | 0.15 | 0.08 | 0.08 |
| Base | Input amount (g) | 100 | 196.5 | 100 | 196.5 | 100 | 100 |
| | Input amount (mol) | 1.22 | 2.40 | 1.22 | 2.40 | 1.22 | 1.22 |
| Aqueous solvent | Input amount (mL) | 80 | 160 | 80 | 160 | 80 | 80 |
| Organic solvent | Input amount (mL) | 1520 | 1520 | 1520 | 1520 | 1520 | 1520 |
| Surface treatment agent | Type | A | A | B | C | D | No input |
| | Input amount (g) | 3.5 | 3.5 | 3.5 | 3 | 3 | No input |
| *Magnetic particle precursor: Iron(III) chloride hexahydrate, 237.93g/mol<br>*Base: sodium acetate, 82.03 g/mol<br>*Aqueous solvent: Distilled water<br>*Organic solvent: ethylene glycol<br>*Surface treatment agent A: Polyacrylic acid (molecular weight 5,100, Sigma-Aldrich)<br>*Surface treatment agent B: Polyacrylic acid (molecular weight 15,000, Sigma-Aldrich)<br>*Surface treatment agent C: Phosphoric acid-based monomolecular dispersant (CS20A, Croda)<br>*Surface treatment agent D: Phosphoric acid-based polymer dispersant (Disper-111, BYK) | | | | | | | |

The input time and type of the magnetic body of Examples 1 to 5 and the surface treatment agent of Comparative Examples 1 to 6, and the matters evaluating characteristics of each magnetic body were summarized in Tables 3 and 4 below.

[Table 3]

| Example | Surface treatment agent | | Magnetic body characteristics | | | | | |
|---|---|---|---|---|---|---|---|---|
| | Input time | Type | Crystal size (nm) | Average particle diameter (nm) | Variation coefficient (%) | Organic matter content (wt%) | SAR (W/g) | Calorific temperature (K) |
| 1 | After clustering of magnetic crystals | A | 30.6 | 100 | 20 | 6.5 | 78.9 | 350.6 |
| 2 | | A | 28.2 | 85 | 14 | 6.9 | 95.4 | 362.4 |
| 3 | | B | 24 | 60 | 30 | 7.3 | 72.2 | 345.8 |
| 4 | | C | 26.8 | 110 | 9 | 5.2 | 91.4 | 359.5 |
| 5 | | D | 29.1 | 80 | 12 | 3.7 | 81.3 | 352.3 |
| *Surface treatment agent A: Polyacrylic acid (molecular weight 5,100, Sigma-Aldrich)<br>*Surface treatment agent B: Polyacrylic acid (molecular weight 15,000, Sigma-Aldrich)<br>*Surface treatment agent C: Phosphoric acid-based monomolecular dispersant (CS20A, Croda)<br>*Surface treatment agent D: Phosphoric acid-based polymer dispersant (Disper-111, BYK) | | | | | | | | |

[Table 4]

| Comparative Example | Surface treatment agent | | Magnetic body characteristics | | | | | |
|---|---|---|---|---|---|---|---|---|
| | Input time | Type | Crystal size (nm) | Average particle diameter (nm) | Variation coefficient (%) | Organic matter content (wt%) | SAR (W/g) | Calorific temperature (K) |
| 1 | When the raw material is prepared | A | 8.4 | 100 | 17 | 11.3 | 50.2 | 330 |
| 2 | | A | 10.5 | 85 | 29 | 11.8 | 49 | 329.1 |
| 3 | | B | 7.6 | 30 | 10 | 16.4 | 26.8 | 313.2 |
| 4 | | C | 12.4 | 90 | 24 | 8.8 | 48.4 | 328.7 |
| 5 | | D | 6.9 | 40 | 15 | 10.5 | 27.2 | 313.5 |
| 6 | | No input | 21.3 | 95 | - | - | 64.2 | 340 |
| *Surface treatment agent A: Polyacrylic acid (molecular weight 5,100, Sigma-Aldrich)<br>*Surface treatment agent B: Polyacrylic acid (molecular weight 15,000, Sigma-Aldrich)<br>*Surface treatment agent C: Phosphoric acid-based monomolecular dispersant (CS20A, Croda)<br>*Surface treatment agent D: Phosphoric acid-based polymer dispersant (Disper-111, BYK) | | | | | | | | |

The XRD analysis results of the magnetic bodies of Example 2 and Comparative Example 2 were shown in Figures 1 and 2, respectively. According to Figures 1 and 2, it can be confirmed that both the magnetic bodies of Example 2 and Comparative Example 2 show a peak having a half width of 0.0721 radians at a 2Θ value of about 62.57 degrees. The relevant peak represents the (440) crystal plane of $Fe_3O_4$. Therefore, it means that both the magnetic particles of Example 2 and Comparative Example 2 comprise $Fe_3O_4$. The size of the magnetic domain in the magnetic body measured according to Equation 3 above was about 28.2 nm or so in Example 2, and about 10.5 nm or so in Comparative Example 2.

SEM photographs taken with respect to the magnetic bodies of Examples 1 and 2 were shown in Figures 3 and 4, respectively, and SEM photographs taken with respect to the magnetic bodies of Comparative Examples 1 and 2 were shown in Figures 5 and 6, respectively. It can be seen through Figures 3 to 6 that the magnetic particles in the magnetic bodies of Examples have a smoother surface compared to the magnetic bodies of the Comparative Examples when the SEM photographs have been checked. Through this, it can be confirmed that the magnetic particles in the magnetic bodies of Examples 1 and 2 have a form in which crystals are clustered, each magnetic particle is surface-treated with the surface treatment agent, and each magnetic particle is in the multi-magnetic domain type in which the average particle diameters are 100 nm and 85 nm. However, in the magnetic particles of the magnetic bodies of Comparative Examples 1 and 2, the surface treatment agent is introduced into the surface of the crystals, whereby they have a relatively small crystal size compared to Examples, and thus it can be confirmed that they have a relatively rough surface. That is, through SEM photograph analysis, it can be seen that the magnetic particles in the magnetic body of the present application have a crystal size and an average particle diameter, which are specified in the present application, and that the magnetic particles are surface-treated with the surface treatment agent.

In addition, through the results of Tables 3 and 4, it can be seen that the magnetic bodies of Examples have excellent calorific characteristics (high SAR value).

### Example 6. Curable composition

A curable composition was prepared by dispersing 5 parts by weight of the magnetic body of Example 1 in 95 parts by weight of a liquid epoxy resin (a mixture that Kukdo Chemical's KSR-177 product and AKEMA's EH4357 were mixed in a weight ratio of 97:3).

### Example 7. Curable composition

A curable composition was prepared in the same manner as in Example 6, except that the magnetic body of Example 2 was applied instead of the magnetic body of Example 1.

### Example 8. Curable composition

A curable composition was prepared in the same manner as in Example 6, except that the magnetic body of Example 3 was applied instead of the magnetic body of Example 1.

### Example 9. Curable composition

A curable composition was prepared in the same manner as in Example 6, except that the magnetic body of Example 4 was applied instead of the magnetic body of Example 1.

### Example 10. Curable composition

A curable composition was prepared in the same manner as in Example 6, except that the magnetic body of Example 5 was applied instead of the magnetic body of Example 1.

### Example 11. Curable composition

A curable composition was prepared by dispersing 5 parts by weight of the magnetic body of Example 2 in 95 parts by weight of an unsaturated polyester imide resin (Voltatex 4200, Axalta).

### Example 12. Curable composition

A curable composition was prepared in the same manner as in Example 11, except that the magnetic body of Example 4 was applied instead of the magnetic body of Example 2.

### Comparative Example 7. Curable composition

A curable composition was prepared by dispersing 5 parts by weight of the magnetic body of Comparative Example 1 in 95 parts by weight of a liquid epoxy resin (a mixture that Kukdo Chemical's KSR-177 product and AKEMA's EH4357 were mixed in a weight ratio of 97:3).

### Comparative Example 8. Curable composition

A curable composition was prepared in the same manner as in Comparative Example 7, except that the magnetic body of Comparative Example 2 was applied instead of the magnetic body of Comparative Example 1.

**Comparative Example 9. Curable composition**

A curable composition was prepared in the same manner as in Comparative Example 7, except that the magnetic body of Comparative Example 3 was applied instead of the magnetic body of Comparative Example 1.

**Comparative Example 10. Curable composition**

A curable composition was prepared in the same manner as in Comparative Example 7, except that the magnetic body of Comparative Example 4 was applied instead of the magnetic body of Comparative Example 1.

**Comparative Example 11. Curable composition**

A curable composition was prepared in the same manner as in Comparative Example 7, except that the magnetic body of Comparative Example 5 was applied instead of the magnetic body of Comparative Example 1.

**Comparative Example 12. Curable composition**

A curable composition was prepared in the same manner as in Comparative Example 7, except that the magnetic body of Comparative Example 6 was applied instead of the magnetic body of Comparative Example 1.

**Comparative Example 13. Cured resin**

A curable composition was prepared in the same manner as in Comparative Example 7, except that no magnetic body was applied, which was cured in an oven to obtain a cured resin.

**Comparative Example 14. Curable composition**

A curable resin was prepared by dispersing 5 parts by weight of the magnetic body of Comparative Example 2 in 95 parts by weight of an unsaturated polyester imide resin (Voltatex 4200, Axalta).

**Comparative Example 15. Curable composition**

A curable composition was prepared in the same manner as in Comparative Example 13, except that the magnetic body of Comparative Example 4 was applied instead of the magnetic body of Comparative Example 2.

The compositions of the curable compositions of Examples 6 to 12 and Comparative Examples 7 to 15 and the matters evaluating their curing properties were summarized and described in Tables 5 and 6 below. In Tables 5 and 6, the description of blanks means that they were not evaluated by the corresponding evaluation method due to insufficient curing.

[Table 5]

| Example | Magnetic body type | Resin | Magnetic field curing | | Filling rate (%) | Bonding Strength (N) | Strength (kgf) |
|---|---|---|---|---|---|---|---|
| | | | Visual inspection | Residual enthalpy (J/g) | | | |
| 6 | Example 1 | Epoxy resin | Cured | 27 | - | - | - |
| 7 | Example 2 | | Cured | 14 | 90 | 68.6 | 76.1 |
| 8 | Example 3 | | Cured | 37 | - | - | - |
| 9 | Example 4 | | Cured | 19 | 88 | 66.6 | 75.2 |
| 10 | Example 5 | | Cured | 24 | - | - | - |
| 11 | Example 2 | Unsaturated polyester resin | Cured | 24 | 79 | 80.4 | 82.1 |
| 12 | Example 4 | | Cured | 37 | 77 | 78.4 | 80.7 |

[Table 6]

| Comparative Example | Magnetic body type | Resin composition | Magnetic field curing | | Filling rate (%) | Bonding Strength (N) | Strength (kgf) |
|---|---|---|---|---|---|---|---|
| | | | Visual inspection | Residual enthalpy (J/g) | | | |
| 7 | Comparative Example 1 | Epoxy resin | Partially cured | - | - | - | - |
| 8 | Comparative Example 2 | | Partially cured | - | - | - | - |
| 9 | Comparative Example 3 | | Uncured | - | - | - | - |
| 10 | Comparative Example 4 | | Partially cured | - | | | |
| 11 | Comparative Example 5 | | Partially cured | - | - | - | - |
| 12 | Comparative Example 6 | | Cured | 42 | 84 | Not measured | 74.3 |
| 13 | - | | Cured | 39 | 75 | 62.7 | 75 |
| 14 | Comparative Example 2 | Unsaturated polyester resin | Cured | 24 | 79 | 80.4 | 82.1 |
| 15 | Comparative Example 4 | | Cured | 37 | 77 | 78.4 | 80.7 |

## Claims

**1.** A magnetic body comprising magnetic particles and a surface treatment agent introduced to the surface of the magnetic particles, wherein

the magnetic particles comprise crystals having a size in a range of 10 nm to 40 nm,
the magnetic particles have an average particle diameter in a range of 20 nm to 300 nm, and
the magnetic particles have a particle diameter variation coefficient in a range of 5% to 30%.

**2.** The magnetic body according to claim 1, wherein
the ratio (B/A) of the average particle diameter (B) of the magnetic particles to the crystal size (A) of the magnetic particles is in a range of 1.5 to 10.

**3.** The magnetic body according to claim 1, wherein

the magnetic particles comprise a compound represented by the following formula 1:

[Formula 1] $MX_aO_b$

wherein, M is a metal or metal oxide, X includes Fe, Mn, Co, Ni or Zn, and |a X c| = |b X d| is satisfied, where c is the cation charge of X, and d is the anion charge of oxygen.

**4.** The magnetic body according to claim 1, wherein
the surface treatment agent has an acid value in a range of 10 mgKOH/g to 400 mgKOH/g, or an amine value in a range of more than 0 mgKOH/g to 20 mgKOH/g or less.

**5.** The magnetic body according to claim 1, wherein
the surface treatment agent has a weight average molecular weight of 20,000 or less.

6. The magnetic body according to claim 1,
comprising the surface treatment agent in a content within the range of 0.01 parts by weight to 30 parts by weight relative to 100 parts by weight of the magnetic particles.

7. The magnetic body according to claim 1,
being in the form of a powder.

8. The magnetic body according to claim 1,

having an SAR value of 60 W/g or more according to the following equation 2:

[Equation 2]

$$SAR = CiXmX\Delta T/\Delta t$$

wherein, SAR means the calorific value of the magnetic fluid in which the magnetic body is dissolved in water, Ci is the specific heat of water as the solvent of the magnetic fluid, which is 4.184 J (gXK), m is the ratio (mi/ma) of the weight of water as the solvent of the magnetic fluid (mi, unit: g) to the weight (ma, unit: g) of the magnetic body, $\Delta T$ is the temperature increase amount (unit: K) of the magnetic fluid when an alternating magnetic field has been applied to 0.35 mL of the magnetic fluid at a temperature of 294 K under conditions of a current of 120.4 A and 310 kHz for 60 seconds, and $\Delta t$ is the time for which the alternating magnetic field of the above conditions is applied to the magnetic fluid, which is 60 seconds.

9. A curable composition comprising the magnetic body of claim 1 and a curable resin.

10. The curable composition according to claim 9, wherein
the curable resin comprises an alkenyl group, a (meth)acryloyl group, an epoxy group, an oxetane group, an alkenyl group, a hydrogen atom bonded to a silicon atom, an isocyanate group, a hydroxy group, a phthalonitrile group or a carboxy group.

11. The curable composition according to claim 9, wherein
the curable resin is a polysilicon resin, polyimide, polyetherimide, polyesterimide, an acrylic resin, a vinyl-based resin, an olefin resin, a polyurethane resin, an isocyanate resin, an acrylic resin, a polyester resin, a phthalonitrile resin, polyamic acid, polyamide or an epoxy resin.

12. A method for producing a magnetic body comprising:

a first step of heating a raw material comprising a magnetic particle precursor and an organic solvent to generate crystals;
a second step of clustering the crystals generated in the first step; and
a third step of mixing the raw material that has passed through the second step with a surface treatment agent.

13. The method for producing a magnetic body according to claim 12, wherein
the content of the magnetic particle precursor in the raw material is in a range of 0.025 M to 0.125 M.

14. The method for producing a magnetic body according to claim 13, wherein

the raw material further comprises a base, and
the content of the base in the raw material is in a range of 0.4 M to 2.0 M.

15. The method for producing a magnetic body according to claim 12, wherein

the raw material further comprises an aqueous solvent, and
the content of the aqueous solvent in the raw material is in a range of 1 vol% to 30 vol% relative to the polar solvent.

16. The method for producing a magnetic body according to claim 12, wherein
the first step is performed at a temperature within a range of 50°C to 90°C.

**17.** The method for producing a magnetic body according to claim 16, wherein
the first step comprises (1-a) a process of raising the temperature of the raw material to a temperature in the range of 50°C to 90°C and (1-b) a process of maintaining the temperature of the raised raw material for a period of time in the range of 30 minutes to 120 minutes.

**18.** The method for producing a magnetic body according to claim 17, wherein
the process (1-a) is performed at a temperature increase rate within the range of 0.5°C/min to 2°C/min.

**19.** The method for producing a magnetic body according to claim 12, wherein
the second step is performed at a temperature within the range of 170°C to 210°C.

**20.** The method for producing a magnetic body according to claim 19, wherein
the second step comprises (2-a) a process of raising the temperature of the raw material that has passed through the first step to a temperature within the range of 170°C to 210°C and (2-b) a process of maintaining the temperature of the raised raw material for a period of time in the range of 12 hours to 80 hours.

**21.** The method for producing a magnetic body according to claim 20, wherein
the process (2-a) is performed at a temperature increase rate within the range of 1.5°C/min to 5°C/min.

**22.** The method for producing a magnetic body according to claim 12, wherein the third step is performed at a temperature within the range of 50°C to 90°C.

**23.** The method for producing a magnetic body according to claim 22, wherein
the third step comprises (3-a) a process of mixing the raw material that has passed through the second step with the surface treatment agent, (3-b) a process of cooling the raw material mixed with the surface treatment agent to a temperature within the range of 50°C to 90°C and (3-c) a process of maintaining the cooled raw material for a period of time in the range of 30 minutes to 120 minutes.

**24.** The method for producing a magnetic body according to claim 23, wherein
the process (3-a) is performed at a temperature reduction rate within the range of 1.5°C/min to 5°C/min.

[Figure 1]

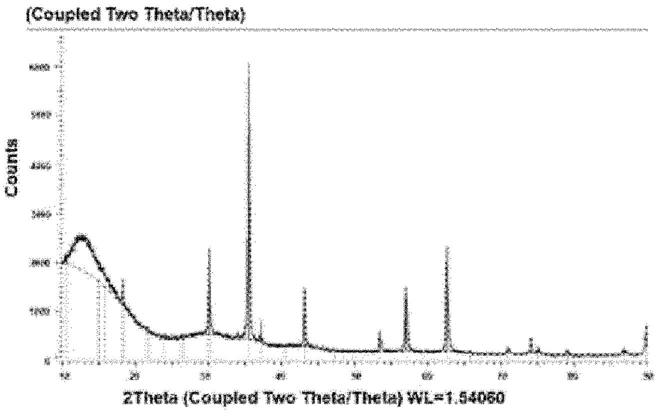


[Figure 2]

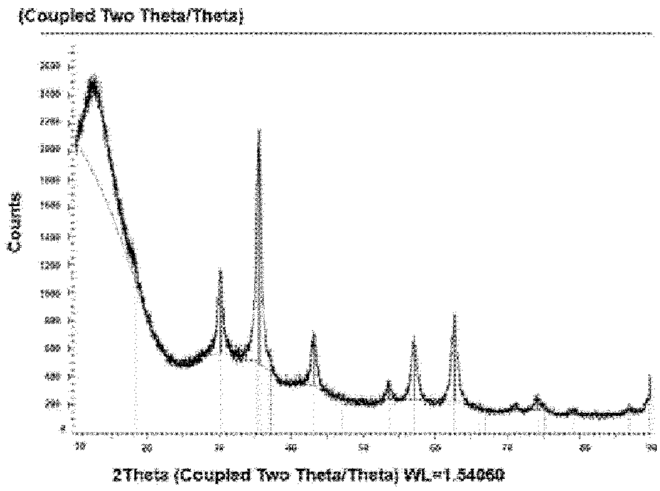


[Figure 3]

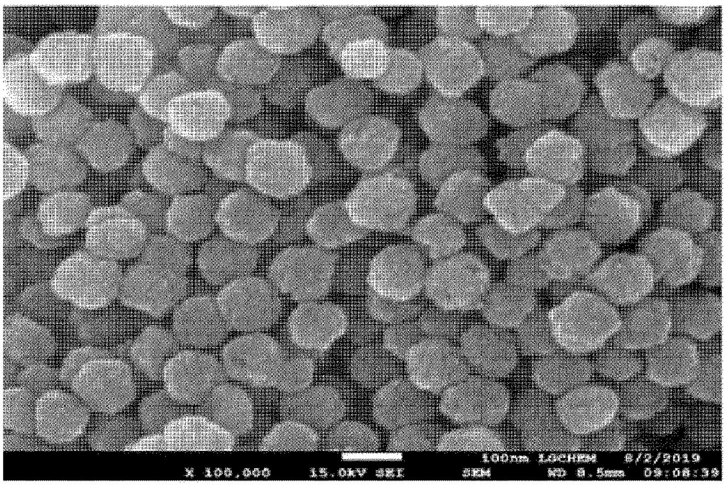

[Figure 4]

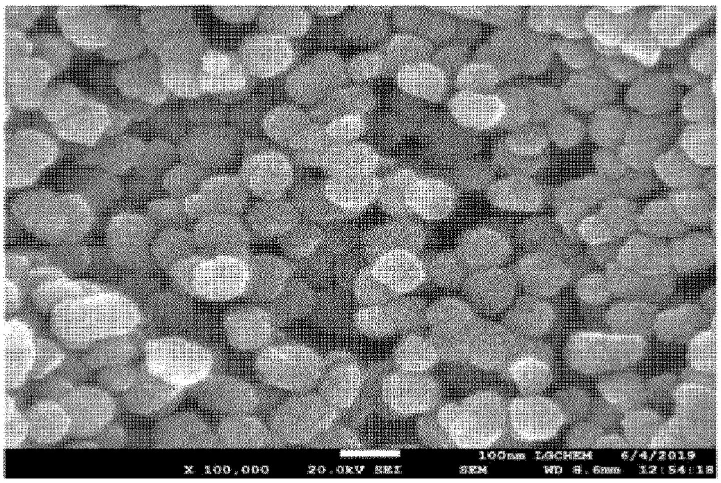


[Figure 5]

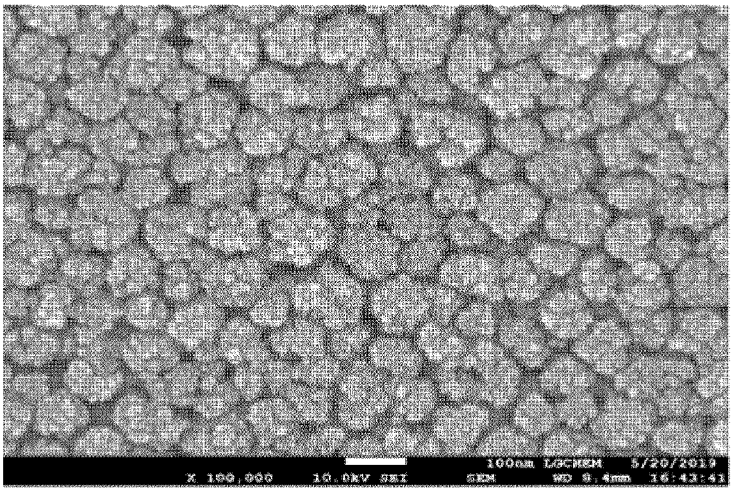


[Figure 6]

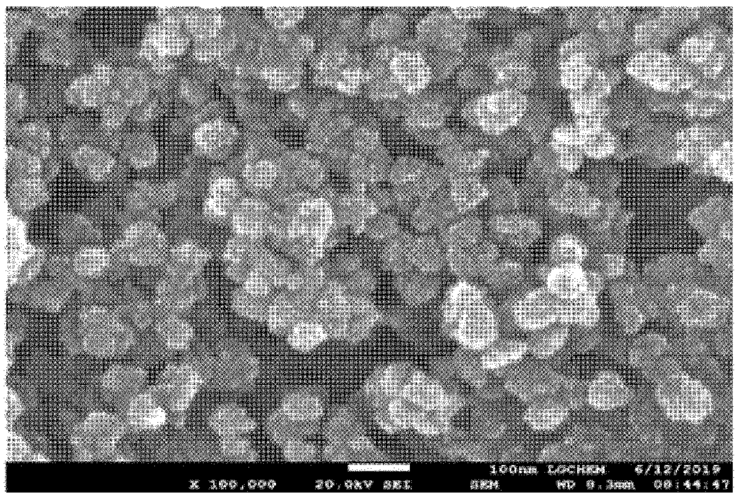

[Figure 7]

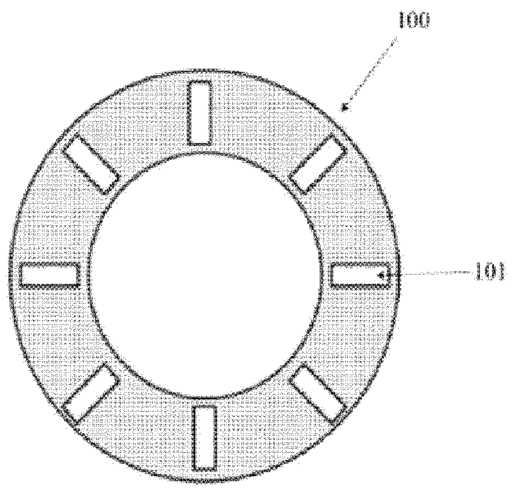

## INTERNATIONAL SEARCH REPORT

International application No.
**PCT/KR2020/013751**

**A. CLASSIFICATION OF SUBJECT MATTER**

**H01F 1/00**(2006.01)i; **H01F 41/02**(2006.01)i; **C09D 133/08**(2006.01)i; **C09D 153/00**(2006.01)i; **C09D 175/00**(2006.01)i; **C08K 9/04**(2006.01)i; **C08K 3/22**(2006.01)i

According to International Patent Classification (IPC) or to both national classification and IPC

**B. FIELDS SEARCHED**

Minimum documentation searched (classification system followed by classification symbols)

H01F 1/00; A61K 9/16; B22F 1/00; C04B 35/26; H01F 1/03; H01F 1/20; H01F 1/24; H01F 1/26; H01F 1/36; H01F 41/02; H01Q 1/38; C09D 133/08; C09D 153/00; C09D 175/00; C08K 9/04; C08K 3/22

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자성(magnetic), 결정(crystal), 입경(particle size), 변동계수(coefficient of variation), 표면처리(surface treatment)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-096923 A (TDK CORP.) 12 May 2011. See paragraphs [0013], [0021] and [0048]. | 1-11,15<br>12-14,16-24 |
| Y | JP 2016-060959 A (TOSHIBA CORP.) 25 April 2016. See paragraphs [0050]-[0052], [0075] and [0101], claims 1 and 20 and figure 1. | 1-24 |
| Y | KR 10-2018-0062425 A (LG CHEM, LTD.) 08 June 2018. See paragraphs [0030]-[0032], [0046] and [0075] and claim 7. | 3-5,9-24 |
| Y | JP 2016-511531 A (THE TRUSTEES OF DARTMOUTH COLLEGE) 14 April 2016. See claim 15. | 8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 January 2021** | **15 January 2021** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2020/013751**

| C. DOCUMENTS CONSIDERED TO BE RELEVANT | | |
|---|---|---|
| Category* | Citation of document, with indication, where appropriate, of the relevant passages | Relevant to claim No. |
| A | JP 06-053064 A (TDK CORP.) 25 February 1994. See claims 1-39. | 1-24 |

Form PCT/ISA/210 (second sheet) (July 2019)

**INTERNATIONAL SEARCH REPORT**
**Information on patent family members**

International application No.
**PCT/KR2020/013751**

| Patent document cited in search report | Publication date (day/month/year) | Patent family member(s) | Publication date (day/month/year) |
|---|---|---|---|
| JP 2011-096923 A | 12 May 2011 | JP 5299223 B2 | 25 September 2013 |
| JP 2016-060959 A | 25 April 2016 | CN 105448450 B | 26 January 2018 |
| | | CN 105448450 A | 30 March 2016 |
| | | JP 6230513 B2 | 15 November 2017 |
| | | US 2016-0086700 A1 | 24 March 2016 |
| KR 10-2018-0062425 A | 08 June 2018 | KR 10-2070570 B1 | 02 March 2020 |
| JP 2016-511531 A | 14 April 2016 | EP 2929547 A1 | 14 October 2015 |
| | | US 2015-0306246 A1 | 29 October 2015 |
| | | WO 2014-089464 A1 | 12 June 2014 |
| JP 06-053064 A | 25 February 1994 | DE 69233101 T2 | 19 May 2004 |
| | | EP 0719745 A2 | 03 July 1996 |
| | | EP 0719745 A3 | 25 September 1996 |
| | | EP 0592672 A1 | 20 April 1994 |
| | | EP 0719745 B1 | 18 June 2003 |
| | | JP 2838632 B2 | 16 December 1998 |
| | | US 5648039 A | 15 July 1997 |
| | | US 6132635 A | 17 October 2000 |
| | | US 5945028 A | 31 August 1999 |
| | | WO 93-22777 A1 | 11 November 1993 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020190158213
- KR 1020190158214